(19) Europäisches Patentamt
European Patent Office
Office européen des brevets

(11) **EP 4 468 115 A1**

(12) **EUROPEAN PATENT APPLICATION**
published in accordance with Art. 153(4) EPC

(43) Date of publication:
**27.11.2024 Bulletin 2024/48**

(21) Application number: **22927819.7**

(22) Date of filing: **28.02.2022**

(51) International Patent Classification (IPC):
*G06F 3/00* (2006.01)          *G06F 3/16* (2006.01)
*G06F 16/90* (2019.01)

(52) Cooperative Patent Classification (CPC):
**G06F 3/00; G06F 3/16; G06F 16/90**

(86) International application number:
**PCT/CN2022/078156**

(87) International publication number:
**WO 2023/159536 (31.08.2023 Gazette 2023/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **ZHANG, Jianshen**
  **Shenzhen, Guangdong 518129 (CN)**
• **LIAN, Hao**
  **Shenzhen, Guangdong 518129 (CN)**

(74) Representative: **Maiwald GmbH**
**Engineering**
**Elisenhof**
**Elisenstrasse 3**
**80335 München (DE)**

(54) **HUMAN-COMPUTER INTERACTION METHOD AND APPARATUS, AND TERMINAL DEVICE**

(57) Embodiments of this application provide a human-computer interaction method and apparatus, and a terminal device. The method includes: obtaining identity information of a first user; selecting, from a plurality of interaction assistants based on the identity information of the first user, a first interaction assistant used to respond to an interaction command of the first user; and interacting with the first user by using the first interaction assistant. According to the foregoing method, embodiments of this application can meet a personalized requirement of the user for human-computer interaction, and improve human-computer interaction experience of the user.

1500

| |
|---|
| S1501: Obtain identity information of a first user |

| |
|---|
| S1502: Select, from a plurality of interaction assistants based on the identity information of the first user, a first interaction assistant used to respond to an interaction command of the first user |

| |
|---|
| S1503: Interact with the first user by using the first interaction assistant |

FIG. 15

**Description**

**TECHNICAL FIELD**

Embodiments of this application relate to the human-computer interaction field, and more specifically, to a human-computer interaction method and apparatus, and a terminal device.

**BACKGROUND**

With development of vehicle intelligence and networking, an automotive smart voice assistant (automotive smart assistant, ASA) has developed rapidly in recent years, and is widely applied to smart driving of vehicles. The smart voice assistant is a goal-or task-oriented platform with a cognitive function, and helps users execute commands or provide services. The smart voice assistant has features such as a cognitive capability, context awareness, multi-mode communication, and a multi-device compatibility, and can provide multi-modal interaction modes through speech based on visual and tactile human-computer interaction.

However, most existing voice interaction assistants rely on a fixed program and mode to "communicate" with a user. In this manner, a speech system can only answer preset user intent based on a preset program and mode, resulting in poor user experience.

**SUMMARY**

To resolve the foregoing technical problem, this application provides a human-computer interaction method and apparatus, and a terminal device, to provide a diversified interaction assistant. This meets a personalized requirement of a user for human-computer interaction, and improves human-computer interaction experience of the user.

According to a first aspect, a human-computer interaction method is provided. The method includes: obtaining identity information of a first user; selecting, from a plurality of interaction assistants based on the identity information of the first user, a first interaction assistant used to respond to an interaction command of the first user; and interacting with the first user by using the first interaction assistant.

The identity information of the first user may include account information of the first user and/or biometric feature parameter information of the first user. The biometric feature parameter information may include one or more of facial information, iris information, or voiceprint information of the first user.

The first interaction assistant used to respond to the interaction command of the first user may be selected from the plurality of interaction assistants based on the identity information of the first user in different manners.

In a possible implementation, the method may be applied to a vehicle. The vehicle may analyze an age, a gender, and a hobby of the first user based on the account information of the first user, and select, from the plurality of interaction assistants, an interaction assistant that matches the age, the gender, and the hobby of the first user to interact with the user.

In a possible implementation, the method may be applied to a vehicle. The vehicle may collect a speech command sent by the first user in a preset time period (for example, one month) or at a preset frequency (for example, 50 times), analyze an emotion status (for example, sad, happy, and normal) of the user based on the speech command of the first user, and select an interaction assistant that matches the emotion status of the first user to interact with the user.

In a possible implementation, the first interaction assistant is an interaction assistant preset by the first user. The first user may select and set an image and an interaction style of the first interaction assistant based on a preference of the first user, and perform human-computer interaction by using the first interaction assistant.

In this embodiment of this application, the identity information of the user may be obtained in different manners, the interaction assistant used to respond to the interaction command of the user is selected from the plurality of interaction assistants based on the identity information of the user, and human-computer interaction is performed by using the interaction assistant. This can meet personalized requirements of different users for human-computer interaction in different scenarios, and improve human-computer interaction experience of the user.

With reference to the first aspect, in some implementations of the first aspect, the method further includes: obtaining identity information of a second user; switching, based on the identity information of the second user, the first interaction assistant to a second interaction assistant used to respond to an interaction command of the second user, where the plurality of interaction assistants include the second interaction assistant; and interacting with the second user by using the second interaction assistant.

The identity information of the second user may include account information of the second user and/or biometric feature parameter information of the second user. The biometric feature parameter information may include one or more of facial information, iris information, or voiceprint information of the second user.

The obtaining identity information of a second user may be applicable to different application scenarios. For example, when the second user enters a vehicle, the vehicle may obtain facial information of the second user by using a camera in the vehicle, to complete switching to the second interaction assistant. For another example, when the vehicle detects that the second user sends speech information, the vehicle obtains the identity information of the second user through voiceprint information recognition, to complete switching to the second interaction assistant.

In this embodiment of this application, the second interaction assistant may be matched for the second user in advance. When the second user interacts with the interaction assistant, the first interaction assistant is switched to the second interaction assistant, and the second interaction assistant is used for interaction. In this manner, interaction assistants may be matched for different users, to meet personalized requirements of different users for human-computer interaction.

With reference to the first aspect, in some implementations of the first aspect, the first user and the second user are users in a driving area in a cockpit of the transportation means.

The user located in the driving area of the transportation means may be a driver.

In this embodiment of this application, both the first user and the second user may be the users in the driving area in the cockpit of the transportation means. In this case, after the driver of the vehicle is changed, the interaction assistant also performs corresponding switching, to provide different drivers with more user-friendly interaction experience.

With reference to the first aspect, in some implementations of the first aspect, an interaction attribute of the first interaction assistant is different from an interaction attribute of the second interaction assistant, and the interaction attribute includes at least one of the following content: an interaction assistant appearance, interaction assistant audio, and an interaction style.

The interaction assistant appearance may include, for example, a character image or an animation image. The interaction assistant audio may be an acoustic parameter of a voice assistant, including one or more of an interaction speaking speed, an intonation, a pitch, a timbre, a volume, and a rhythm. In addition, the acoustic parameter may further include a dialect parameter, for example, a Shanghai dialect and a Shaanxi dialect. The acoustic parameters may further include a language parameter, for example, Chinese, English, and Japanese. The interaction style may include, for example, sad, happy, and normal.

In this embodiment of this application, at least one interaction attribute of the first interaction assistant is set to be different from that of the second interaction assistant, so that a personalized interaction assistant is matched for the user, and the user can be provided with more humanized interaction experience.

With reference to the first aspect, in some implementations of the first aspect, the first user is a user in the driving area in the cockpit of the transportation means, and the second user is a user in a non-driving area in the cockpit of the transportation means.

In this embodiment of this application, the first user is a driver, and the second user may be another passenger other than the driver. In this way, for different types of users in the transportation means, interaction may be performed by using interaction assistants with different interaction styles and interaction models, to provide more humanized interaction experience for different users in the transportation means.

With reference to the first aspect, in some implementations of the first aspect, the method further includes: obtaining an interaction command sent by a third user; and interacting with the third user by using the first interaction assistant.

In this embodiment of this application, in a process in which the first interaction assistant is used for interaction, the interaction command sent by the third user is obtained, and the first interaction assistant may be used to interact with the third user. In this manner, no interaction assistant needs to be matched for the third user in advance, and a more flexible human-computer interaction mode can be provided.

With reference to the first aspect, in some implementations of the first aspect, the interacting with the first user by using the first interaction assistant includes: interacting with the first user by using a first interaction style of the first interaction assistant. The method further includes: obtaining an emotion status of the first user in preset duration or at a preset frequency; updating the first interaction style of the first interaction assistant to a second interaction style based on the emotion status of the first user; and interacting with the first user by using the second interaction style of the first interaction assistant.

The interaction style of the interaction assistant may include an acoustic parameter of the interaction assistant and/or text information of human-computer interaction displayed on a vehicle display. The acoustic parameter may include one or more of a speaking speed, an intonation, a pitch, a timbre, a volume, and a rhythm.

In this embodiment of this application, the interaction style of the interaction assistant may be switched based on the emotion status of the user, and the interaction style that meets the emotion status of the user is used to interact with the user. In this manner, an emotional requirement of the user can be considered during human-computer interaction, and human-computer interaction experience of the user is improved.

With reference to the first aspect, in some implementations of the first aspect, before the updating the first interaction style of the first interaction assistant to a second interaction style based on the emotion status of the first user, the method further includes:
obtaining a command for enabling an interaction style update function, where when the interaction style update function is enabled, the interaction style of the first interaction assistant can be updated based on the emotion status of the first user.

In this embodiment of this application, the user may choose, based on a preference of the user, whether to enable the interaction style update function. In this manner, when the user chooses not to enable the function, the vehicle does not collect and analyze interaction data between the user and the interaction assistant, so that user privacy can be protected. In addition, when the user chooses to enable the function, the interaction style of the interaction assistant can change based on the emotion status of the user, providing the user with personalized human-computer interaction experience.

It should be understood that in this embodiment of this application, the interaction style update function may also be referred to as a real-time interaction assistant optimization function.

With reference to the first aspect, in some implementations of the first aspect, the first interaction assistant is a voice interaction assistant.

According to a second aspect, a human-computer interaction method is provided. The method includes: interacting with a first user by using a first interaction style of a first interaction assistant; obtaining an emotion status of the first user in preset duration or at a preset frequency; updating the first interaction style of the first interaction assistant to a second interaction style based on the emotion status of the first user; and interacting with the first user by using the second interaction style of the first interaction assistant.

In this embodiment of this application, in a process of interacting with the first user by using the first interaction style, a vehicle may collect and analyze an emotion status (for example, sad, happy, and normal) of the first user during interaction performed by the first user by using the first interaction style of the first interaction assistant in the preset time period (for example, one month) or at the preset frequency (for example, 50 times), and update the interaction style based on the emotion status of the first user. In this manner, an emotional requirement of the user can be considered during human-computer interaction, and human-computer interaction experience of the user is improved.

With reference to the second aspect, in some implementations of the second aspect, before the updating the first interaction style of the first interaction assistant to a second interaction style based on the emotion status of the first user, the method further includes: obtaining a command for enabling an interaction style update function, where when the interaction style update function is enabled, the interaction style of the first interaction assistant can be updated based on the emotion status of the first user.

In this embodiment of this application, only when obtaining the command for enabling the interaction style update function, the vehicle collects and analyzes the emotion status of the first user during interaction performed by the first user by using the first interaction style of the first interaction assistant in the preset time period or at the preset frequency. In this manner, whether to enable the interaction style update function may be selected based on user intent, providing the user with better human-computer interaction experience.

According to a third aspect, a voice broadcast method is provided. The method includes: obtaining first speech information; determining an emotion status of a user and first text information based on the first speech information, where the first text information is a broadcast text for the first speech information; and performing voice broadcast on the first text information based on the emotion status of the user.

In this embodiment of this application, the emotion status of the user and the text information of voice broadcast may be determined by using the speech information input by the user, and voice broadcast is performed on the text information based on the emotion status of the user. This can meet a personalized requirement of the user for voice broadcast, and improve human-computer interaction experience of the user.

With reference to the third aspect, in some implementations of the third aspect, the performing voice broadcast on the first text information based on the emotion status of the user includes: determining an acoustic parameter based on the emotion status of the user, where the acoustic parameter includes at least one of a speaking speed, an intonation, a pitch, a timbre, a volume, and a rhythm; and performing voice broadcast on the first text information by using the acoustic parameter.

For example, when the user is happy, the acoustic parameter of the voice assistant may be set to 0.8 times a first speaking speed, 1.3 times a first intonation, and 0.9 times a first rhythm. The voice assistant can use the specific speech parameter to perform voice broadcast, to provide the user with better voice broadcast experience.

In this embodiment of this application, the acoustic parameter for voice broadcast may be determined based on the emotion status of the user. During voice broadcast, the acoustic parameter is used for voice broadcast, so that an emotional requirement of the user can be better met, and the user is provided with better human-computer interaction experience.

With reference to the third aspect, in some implementations of the third aspect, the method further includes: obtaining a vehicle status parameter, where the vehicle status parameter indicates a driving status and/or an external environment condition of the vehicle. The performing voice broadcast on the first text information based on the emotion status of the user includes: performing voice broadcast on the first text information based on the emotion status of the user and the vehicle status parameter.

The vehicle status parameter may indicate both the driving status of the vehicle and the external environment condition of the vehicle. For example, a parameter indicating the driving status of the vehicle, such as a vehicle speed or a vehicle battery level, may be used as the vehicle status parameter. A parameter indicating the external environment of the vehicle, such as road surface flatness or a lane width, may be used as the vehicle status parameter.

In this embodiment of this application, after obtaining the vehicle status parameter, the voice assistant may perform voice broadcast on the first text information based on the emotion status of the user and the vehicle status parameter. In this way, voice broadcast meets an emotional requirement of the user, caters to a driving status of the user, and further improves voice broadcast experience of the user.

With reference to the third aspect, in some implementations of the third aspect, image information is displayed based on the emotion status of the user during voice broadcast.

Specifically, when performing voice broadcast, the voice assistant may display different image information on a display of the vehicle based on the emotion status of the user, to enrich an application scenario of voice broadcast. The image information may be a picture, an expression, an animation, or the like. For example, when the user is happy, a smiley face expression may be displayed on the display of the vehicle to match voice broadcast during voice broadcast. For another example, when the user is happy, a character animation of "dancing with joy" may be displayed on the display of the vehicle during voice broadcast, to improve an atmosphere of voice broadcast.

In this embodiment of this application, the image information displayed during voice broadcast may be determined based on the emotion status of the user, and the image information is displayed during voice broadcast. In this manner, the application scenario of voice broadcast can be enriched, and human-computer interaction experience of the user can be improved.

With reference to the third aspect, in some implementations of the third aspect, the determining an emotion status of a user based on the first speech information includes: performing speech emotion analysis on the first speech information, to obtain a speech emotion status; and determining the emotion status of the user based on the speech emotion status.

In an actual working process, that the voice assistant determines the emotion status of the user by using the speech information input by the user may specifically include obtaining the emotion status of the user through speech emotion analysis. Speech emotion analysis is performed by using a commonly used machine learning classifier and spectrogram, and a deep learning model.

In this embodiment of this application, the emotion status of the user is determined by performing speech emotion analysis on the speech information input by the user, so that the emotion status of the user can be accurately obtained, and voice broadcast that better conforms to the emotion status of the user can be performed. This further improves human-computer interaction experience of the user.

With reference to the third aspect, in some implementations of the third aspect, the method further includes: obtaining second text information corresponding to the first speech information; and performing text emotion analysis on the second text information, to obtain a text emotion status.

The determining the emotion status of the user based on the speech emotion status includes: determining the emotion status of the user based on the speech emotion status and the text emotion status.

During text emotion analysis, the emotion status of the user is obtained by analyzing a degree value of a degree adverb in the second text information (a positive value indicates intensified, negative value indicates negative) multiplied by an emotion value of an emotion word.

In this embodiment of this application, the emotion status of the user is determined by performing text emotion analysis and speech emotion analysis on the speech information input by the user, so that the emotion status of the user can be more accurately obtained, and voice broadcast that better conforms to the emotion status of the user can be performed. This further improves human-computer interaction experience of the user.

With reference to the third aspect, in some implementations of the third aspect, the determining an emotion status of a user based on the first speech information further includes: obtaining facial expression information of the user. The determining an emotion status of a user based on the first speech information includes: determining the emotion status of the user based on the first speech information and the facial expression information of the user.

The facial expression information of the user may be obtained through facial recognition. For example, in a driving process of the vehicle, a built-in camera of the vehicle may be configured to recognize a face of the user, to determine a facial mood or a fatigue state of the user. In this way, the emotion status of the user is obtained.

In this embodiment of this application, the facial expression information of the user may be obtained, and the emotion status of the user may be obtained based on the facial expression information of the user and the first speech information. This can more accurately obtain the emotion status of the user, and further improve human-computer interaction experience of the user.

According to a fourth aspect, a model training method is provided. The method includes: inputting identity information of a user into a first model, to obtain an interaction assistant that matches the identity information of the user. The first model is obtained based on a first training sample. The first training sample includes sample identity information of the user and interaction assistant attribute sample information. The interaction assistant attribute includes at least one of the following content: an interaction assistant appearance, interaction assistant audio, and an interaction style.

According to a fifth aspect, a human-computer interaction apparatus is provided. The apparatus includes: an obtaining unit, configured to obtain identity information of a first user; and a processing unit, configured to select, from a plurality of interaction assistants based on the identity information of the first user, a first interaction assistant used to respond to an interaction command of the first user. The processing unit is further configured to interact with the first user by using the first interaction assistant.

With reference to the fifth aspect, in some implementations of the fifth aspect, the obtaining unit is further configured to obtain identity information of a second user. The processing unit is further configured to switch, based on the identity information of the second user, the first interaction assistant to a second interaction assistant used to respond to an interaction command of the second user. The plurality of interaction assistants include the second interaction assistant. The processing unit is further configured to interact with the second user by using the second interaction assistant.

With reference to the fifth aspect, in some implementations of the fifth aspect, the apparatus is used in a transportation means, and the first user and the second user are users in a driving area in a cockpit of the transportation means.

With reference to the fifth aspect, in some implementations of the fifth aspect, an interaction attribute of the first interaction assistant is different from an interaction attribute of the second interaction assistant, and the interaction attribute includes at least one of the following content: an interaction assistant appearance, interaction assistant audio, and an interaction style.

With reference to the fifth aspect, in some implementations of the fifth aspect, the obtaining unit is further configured to obtain an interaction command sent by a third user; and the processing unit is further configured to interact with the third user by using the first interaction assistant.

With reference to the fifth aspect, in some implementations of the fifth aspect, the processing unit is specifically configured to interact by using a first interaction style of the first interaction assistant. The obtaining unit is further configured to obtain an emotion status of the first user in preset duration or at a preset frequency. The processing unit is further configured to update the first interaction style of the first interaction assistant to a second interaction style based on the emotion status of the first user. The processing unit is further configured to interact by using the second interaction style of the first interaction assistant.

With reference to the fifth aspect, in some implementations of the fifth aspect, the obtaining unit is further configured to obtain a command for enabling an interaction style update function, where when the interaction style update function is enabled, the interaction style of the first interaction assistant can be updated based on the emotion status of the first user.

With reference to the fifth aspect, in some implementations of the fifth aspect, the identity information of the first user includes account information of the first user and/or biometric feature parameter information of the first user.

With reference to the fifth aspect, in some implementations of the fifth aspect, the first interaction assistant is a voice interaction assistant.

According to a sixth aspect, a human-computer interaction apparatus is provided. The apparatus includes at least one processor and a memory. The at least one processor is coupled to the memory, and is configured to: read and execute instructions in the memory. The apparatus is configured to perform the methods in the foregoing aspects.

According to a seventh aspect, a computer-readable medium is provided. The computer-readable medium stores program code, and when the computer program code is run on a computer, the computer is enabled to perform the method in the foregoing aspects.

According to an eighth aspect, a chip is provided. The chip includes at least one processor and a memory. The at least one processor is coupled to the memory, and is configured to: read and execute instructions in the memory. The apparatus is configured to perform the methods in the foregoing aspects.

According to a ninth aspect, a computer program product is provided. The computer product includes a computer program, and when the computer program is executed, a computer is enabled to perform the methods in the foregoing aspects.

According to a tenth aspect, a terminal device is provided, including the apparatuses in the foregoing aspects. The terminal device may be a vehicle, or may be a mobile phone. When the terminal device is a vehicle, the terminal device may include an in-vehicle infotainment system and a microphone.

In the technical solutions provided in embodiments of this application, the identity information of the user may be obtained in different manners (account login, facial recognition, and sound recognition), the interaction assistant used to respond to the interaction command of the user is selected from the plurality of interaction assistants based on the identity information of the user, and human-computer interaction is performed by using the interaction assistant. This can meet personalized requirements of different users for human-computer interaction in different scenarios, and improve human-computer interaction experience of the user. The interaction style of the interaction assistant may be switched based on the emotion status of the user, and the interaction style that meets the emotion status of the user is used to interact with the user. In this manner, an emotional requirement of the user can be considered during human-computer interaction, and human-computer interaction experience of the user is improved. The user may choose, based on a preference of the user, whether to enable the interaction style update function. In this manner, when the user chooses not to enable the function, the vehicle does not collect and analyze interaction data between the user and the interaction assistant, so that user privacy can be protected. In addition, when the user chooses to enable the function, the interaction style of the interaction assistant can change based on the emotion status of the user, providing the user with personalized human-computer interaction experience.

## BRIEF DESCRIPTION OF DRAWINGS

FIG. 1 is a schematic functional diagram of a vehicle according to an embodiment of this application;
FIG. 2(a)-1 to FIG. 2(g)-2 are a diagram of an application scenario of voice broadcast of an interaction assistant according to an embodiment of this application;
FIG. 3(a)-1 to FIG. 3(c)-2 are another diagram of an application scenario of voice broadcast of an interaction assistant according to an embodiment of this application;
FIG. 4(a)-1 to FIG. 4(b)-2 are still another diagram of an application scenario of voice broadcast of an interaction assistant according to an embodiment of this application;
FIG. 5(a) to FIG. 5(e)-3 are a schematic diagram of example graphical user interfaces according to an embodiment of this application;
FIG. 6 is an architectural diagram of a voice assistant system according to an embodiment of this application;
FIG. 7 is a flowchart of voice broadcast of a voice assistant according to an embodiment of this application;
FIG. 8 is a flowchart of detecting a user emotion by a voice assistant according to an embodiment of this application;
FIG. 9 is a schematic diagram of vehicle status detection content according to an embodiment of this application;
FIG. 10 is a flowchart of a voice broadcast policy of a voice assistant according to an embodiment of this application;
FIG. 11 is a flowchart of a real-time optimization policy of voice broadcast of a voice assistant according to an embodiment of this application;
FIG. 12 is an architectural diagram of expression animation generation of a voice assistant according to an embodiment of this application;
FIG. 13 is a network structure of a facial expression generation model of a voice assistant according to an embodiment of this application;
FIG. 14 is a network structure of a body animation generation model of a voice assistant according to an embodiment of this application;
FIG. 15 is a schematic flowchart of a human-computer interaction method according to an embodiment of this application;
FIG. 16 is a schematic diagram of a human-computer interaction apparatus according to an embodiment of this application; and
FIG. 17 is another schematic diagram of a human-computer interaction apparatus according to an embodiment of this application.

## DESCRIPTION OF EMBODIMENTS

The following describes technical solutions of this application with reference to accompanying drawings.

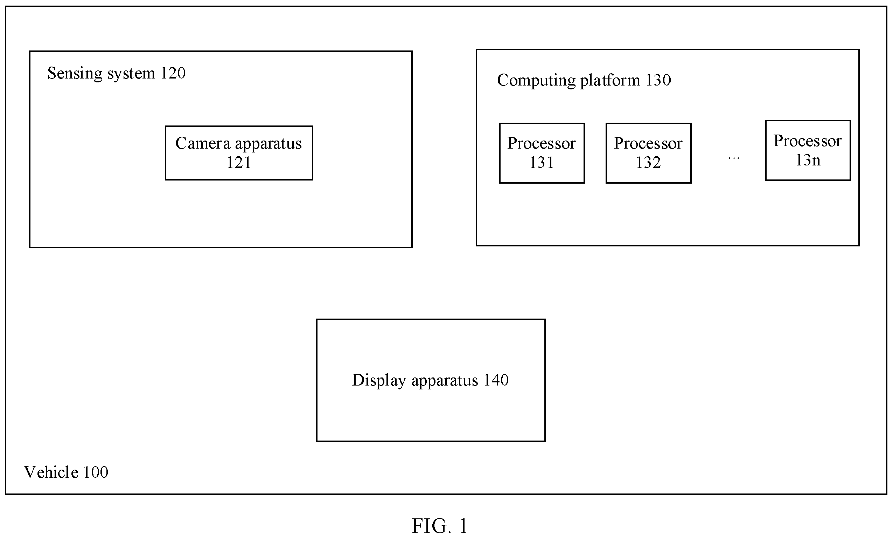

To facilitate understanding, FIG. 1 uses a smart driving scenario as an example, to describe a scenario to which an embodiment of this application is applicable.

FIG. 1 is a schematic functional diagram of a vehicle 100 according to an embodiment of this application. It should be understood that FIG. 1 and related descriptions are only examples, and do not limit the vehicle in this embodiment of this application.

In an implementation process, the vehicle 100 may be configured to be in a fully or partially autonomous driving mode, or may be manually driven by a user. For example, the vehicle 100 may obtain surrounding environment information of the vehicle 100 by using a sensing system 120, and obtain an autonomous driving policy based on analysis of the surrounding environment information, to implement fully autonomous driving, or present an analysis result to the user, to implement partially autonomous driving.

The vehicle 100 may include a plurality of subsystems, such as the sensing system 120, a computing platform 130, and a display apparatus 140. Optionally, the vehicle 100 may include more or fewer subsystems, and each subsystem may include one or more components. In addition, each subsystem and component of the vehicle 100 may be connected to each other in a wired or wireless manner.

The sensing system 120 may include several types of sensors that sense the surrounding environment information of the vehicle 100. For example, the sensing system 120 may include a positioning system. The positioning system may be a global positioning system (global positioning system, GPS), or may be a BeiDou system or another positioning system. The sensing system 120 may include one or more of an inertia measurement unit (inertial measurement unit, IMU), a laser radar, a millimeter wave radar, an ultrasonic radar, and a camera apparatus 121.

The camera apparatus 121 may be configured to capture image information of a surrounding environment of the vehicle 100. The camera apparatus 121 may include a monocular camera, a binocular camera, a structured light camera, a panorama camera, and the like. The image information obtained by the camera apparatus 121 may include static image information, or may include video stream information. The image information may be stored in a form of an image or a video, or may be stored in a form of an image parameter or a video parameter, for example, parameter information such as brightness, grayscale, color distribution, contrast, and a pixel of an image.

Some or all functions of the vehicle 100 may be controlled by the computing platform 130. The computing platform 130 may include processors 131 to 13n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), such as an FPGA. In a reconfigurable hardware circuit, a process in which the processor loads a configuration document to implement hardware circuit configuration may be understood as a process in which the processor loads instructions to implement functions of some or all of the foregoing units. In addition, the reconfigurable hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may call the instructions in the memory to implement quality and implement a corresponding function.

The computing platform 130 may control a function of the vehicle 100 based on inputs received from various subsystems (for example, the sensing system 120). In some embodiments, the computing platform 130 is operated to control the vehicle 100 and the subsystems of the vehicle in many aspects.

Optionally, the foregoing components are only examples. In actual application, components in the foregoing modules may be added or removed based on an actual requirement. FIG. 1 should not be construed as a limitation on this embodiment of this application.

An autonomous vehicle traveling on a road, for example, the foregoing vehicle 100, may identify an object in the surrounding environment of the vehicle, to determine adjustment on a current speed. The object may be another vehicle, a traffic control device, or another type of object. In some examples, the autonomous vehicle may independently consider each identified object, and may determine a to-be-adjusted speed of the autonomous vehicle based on a feature of each identified object, such as a current speed of the object, acceleration of the object, and a distance between the object and the autonomous vehicle.

Optionally, the vehicle 100 or a sensing and computing device (for example, the computing platform 130) associated with the vehicle 100 may predict behavior of the identified object based on the feature of the identified object and a status of the surrounding environment (for example, traffic, rain, and ice on a road). Optionally, all identified objects depend on behavior of each other. Therefore, all the identified objects may be considered together to predict behavior of a single identified object. The vehicle 100 can adjust a speed of the vehicle 100 based on the predicted behavior of the identified object. In other words, the autonomous vehicle can determine, based on the predicted behavior of the object, a stable status (for example, accelerated, decelerated, or stopped) to which the vehicle needs to be adjusted. In this process, another factor may also be considered to determine the speed of the vehicle 100, for example, a horizontal position of the vehicle 100 on a road on which the vehicle travels, curvature of the road, and proximity between the vehicle and both a static object and a dynamic object.

In addition to providing a command for adjusting the speed of the autonomous vehicle, the computing device may further provide a command for modifying a steering angle of the vehicle 100, so that the autonomous vehicle follows a given trajectory and/or keeps safe horizontal and vertical distances from an object near the autonomous vehicle (for example, a car in an adjacent lane of the road).

The foregoing vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not limited in this embodiment of this application.

Speech interaction means information transmission between a human and a device by using a natural speech. An existing working principle of a voice interaction assistant is as follows: After receiving a speech command of a user, the voice interaction assistant analyzes an acoustic speech of the user, to obtain corresponding text and pinyin information and form a corresponding command text. Then, the voice assistant converts the command text into a structured, machine-readable language. Finally, the voice assistant generates a feedback text that meets a user expectation, and performs speech synthesis based on the feedback text, so that the voice assistant "speaks".

However, most existing voice interaction assistants rely on a fixed program and mode to "communicate" with the user. In this manner, a speech system can only answer preset user intent based on a preset program and mode. As a result, an application scope of the speech system is relatively narrow.

Embodiments of this application provide a human-computer interaction method and apparatus, and a terminal device. This can meet a personalized requirement of a user for human-computer interaction, and improves human-computer interaction experience of the user.

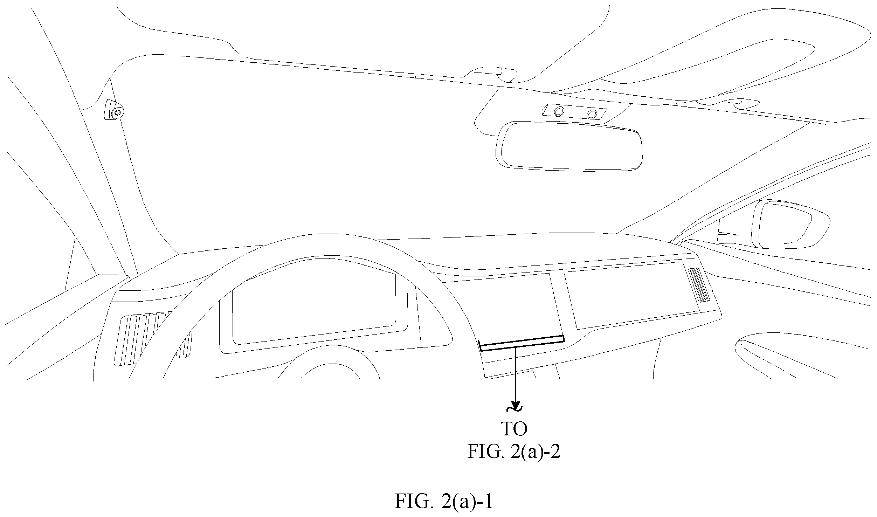

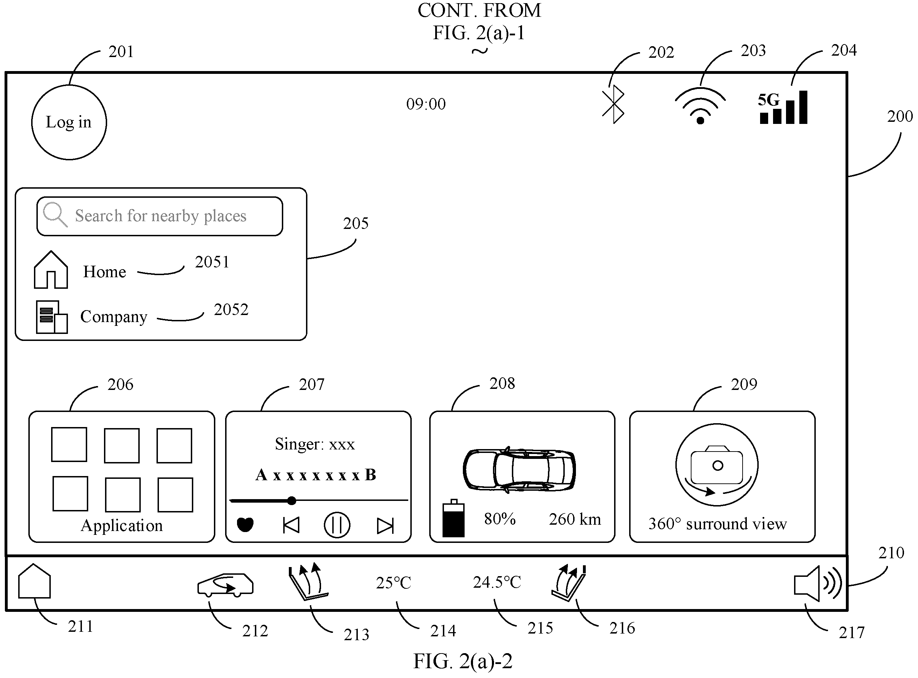

FIG. 2(a)-1 to FIG. 2(g)-2 are a diagram of an application scenario of human-computer interaction of an interaction assistant according to an embodiment of this application. The diagram of the application scenario of human-computer interaction of in FIG. 2(a)-1 to FIG. 2(g)-2 may be applied to the vehicle 100 in FIG. 1.

As shown in FIG. 2(a)-1 and FIG. 2(a)-2, a display interface 200 and a function bar 210 are displayed on a central control screen of a vehicle. The display interface 200 includes user account login information 201 (the current vehicle has not logged in to an account), a Bluetooth function icon 202, a Wi-Fi function icon 203, a cellular network signal icon 204, an in-vehicle map application search box 205, a card 206 for switching to display all applications installed on the vehicle, a card 207 for switching to display an in-vehicle music application, a card 208 for displaying a remaining battery level and a remaining driving mileage of the vehicle, and a card 209 for displaying a 360-degree (°) surround view function of the vehicle. The in-vehicle map application search box 205 may include a home control 2051 and a company control 2052 that are set by a user. The function bar 210 includes an icon 211 for switching to display a desktop of the central control screen, an internal vehicle circulation icon 212, a driver seat heating function icon 213, a driver area air conditioner temperature display icon 214, a front passenger area air conditioner temperature display icon 215, a front passenger seat heating function icon 216, and a volume setting icon 217.

In a possible implementation, the user may log in to an account of the user on the central control screen of the vehicle. The vehicle may identify an identity of the user by using account information of the user, select, from a plurality of interaction assistants, an interaction assistant used to respond to an interaction command of the user, and perform human-computer interaction with the user by using the interaction assistant.

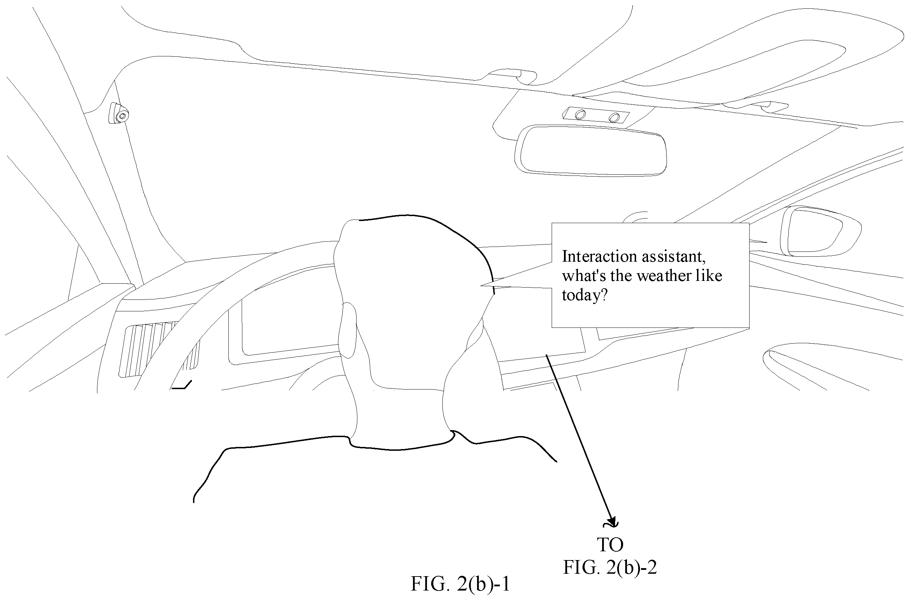

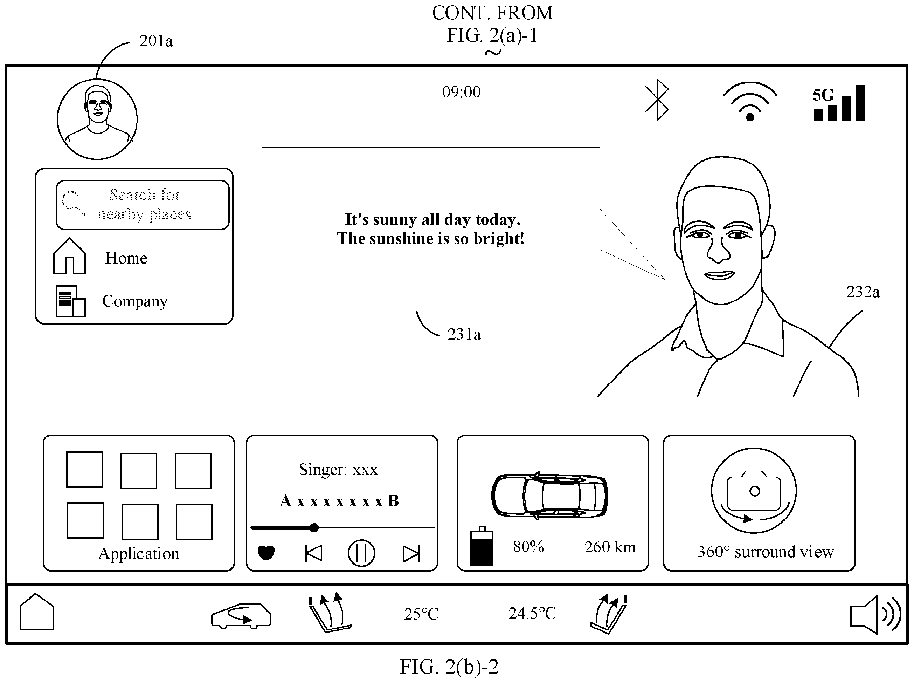

As shown in FIG. 2(b)-1 and FIG. 2(b)-2, when driving the vehicle, a user A first logs in to an account of the user A on the central control screen of the vehicle. After the account is logged in, a login avatar 201a of the user A may be displayed at a position 201 on the central control screen. The vehicle may select, from the plurality of interaction assistants, an interaction assistant 232a that matches the user A to perform speech interaction with the user A.

In a possible implementation, the vehicle may obtain information about the user based on account information of the user A, for example, an age, a gender, and a hobby of the user. Then, the vehicle may select, from the plurality of interaction assistants, an interaction assistant that matches the information about the user A to interact with the user. For example, the vehicle analyzes that the user A is 30 years old, the gender is male, and the hobby is listening to crosstalk. The vehicle may select a model and a sound of a favorite crosstalk performer of the user A to perform voice broadcast. For another example, the vehicle analyzes that the user A is 8 years old, the gender is male, and the hobby is watching an animation. The vehicle may select a favorite animation model and sound of the user A to perform voice broadcast. In an implementation process, obtaining the user information usually needs to be authorized by the user, and the user information may be stored within a validity time period or not stored, to ensure user privacy.

In a possible implementation, the vehicle may obtain a speech command sent by the user A in a past time period, then analyze, based on the speech command of the user A, a personality and a habit of the user or a current status of the user, and select, from the plurality of interaction assistants, an interaction assistant that matches the personality and the habit of the user A or the current status of the user, to interact with the user. For example, the vehicle collects a speech command of the user in a past week, and finds, through analysis, that the personality of the user A is relatively impetuous. The vehicle may select an interaction assistant with a voice broadcast gentle style and a lovely voice broadcast image to interact with the user A.

In a possible implementation, the vehicle may switch the interaction assistant based on a real-time emotion status of the user A. For example, the vehicle first matches an interaction assistant with a gentle voice broadcast style and a lovely voice broadcast image to the user A, to interact with the user A. After a time period, the vehicle learns, based on feedback from the user, that the emotion status of the user is poor. In this case, the vehicle may select an interaction assistant with a pleasant voice broadcast style to interact with the user.

In a possible implementation, the interaction assistant may further be an interaction assistant preset by the user A. The user A may select and set an image and a broadcast style of the interaction assistant based on a preference of the user A, and perform human-computer interaction by using the interaction assistant.

In one or more possible implementations, the vehicle can match an interaction assistant with different interaction attributes for a same user, or match interaction assistants with different interaction attributes for different users. The interaction attribute includes at least one of the following content: an interaction assistant appearance, interaction assistant audio, and an interaction style. The interaction assistant appearance may include, for example, a character image or an animation image. The interaction assistant audio may be an acoustic parameter of the interaction assistant, including one or more of an interaction speaking speed, an intonation, a pitch, a timbre, a volume, and a rhythm. In addition, the acoustic parameter may further include a dialect parameter, for example, a Shanghai dialect and a Shaanxi dialect. The acoustic parameters may further include a language parameter, for example, Chinese, English, and Japanese. The interaction style may include, for example, sad, happy, and normal.

An application scenario in which the vehicle matches the interaction assistant with different interaction attributes for the same user is as follows: For example, the interaction assistant 232a with a first interaction attribute is first matched for the user A. In a process in which the user A drives the vehicle, the user A sends a speech command "What's the weather like today?" to the interaction assistant 232a. The interaction assistant 232a may answer "It's sunny all day today. The sunshine is so bright!" During interaction, the interaction assistant 232a answers the question of the user by using the first interaction attribute (a male character image, a normal interaction style, and a Shanghai dialect). The vehicle collects user data in a week, and finds that the emotion status of the user in a recent week is poor, and analyzes that a hobby of the user is listening to crosstalk. The vehicle may switch the first interaction attribute of the interaction assistant 232a to a second interaction attribute. In this case, in a process in which the user A drives the vehicle, the user A resends a speech command "What's the weather like today?" to the interaction assistant 232a. The interaction assistant 232a may answer "It's sunny all day today. The sunshine is so bright!" During interaction, the interaction assistant 232a answers the question of the user A by using a second interaction attribute (a male character image, a happy interaction style, and a Tianjin dialect).

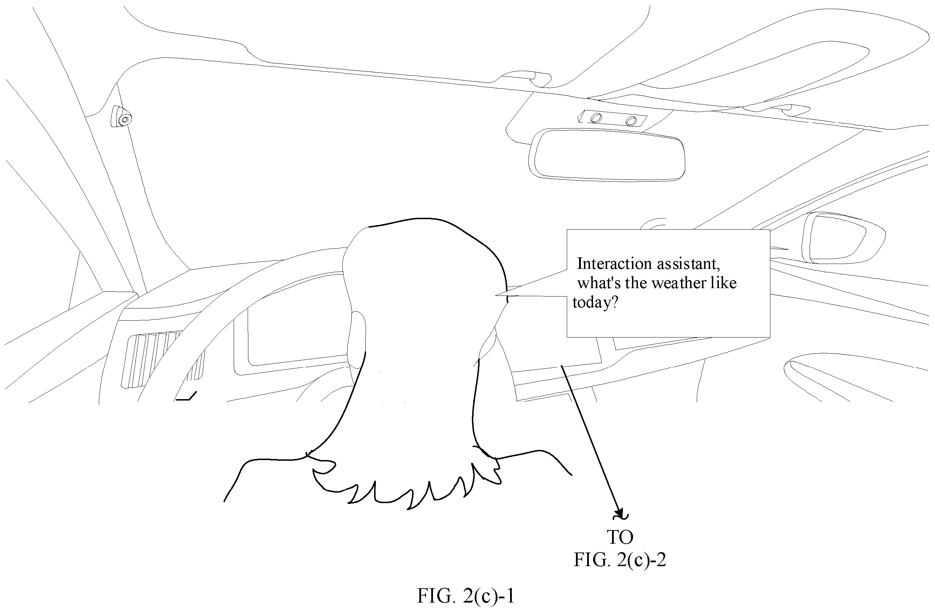

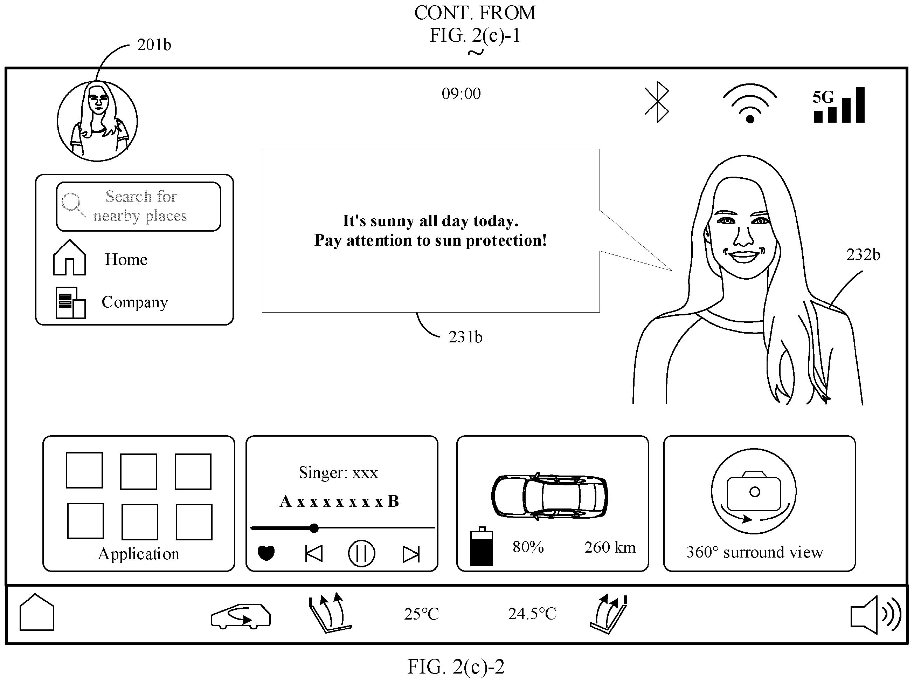

An application scenario in which the vehicle matches the interaction assistant with different interaction attributes for the same user is as follows: For example, as shown in FIG. 2(c)-1 and FIG. 2(c)-2, when driving the vehicle, a user B first logs in to an account of the user B on the central control screen of the vehicle. After the account is logged in, a login avatar 201b of the user B may be displayed on the central control screen. The vehicle may select, from the plurality of interaction assistants, an interaction assistant 232b that has a third interaction attribute and that matches a personality and a habit of the user B, to perform speech interaction with the user B. In a process of driving the vehicle, the user B may communicate with the interaction assistant 232b at any time. For example, the user B sends a speech command "What's the weather like today?" that is the same as that of the user A to the interaction assistant 232b. The interaction assistant 232b may answer "It's sunny all day today. Pay attention to sun protection!" The interaction assistant 232b answers the question of the user B by using the third interaction attribute (a female character image, a normal interaction style, and 1.2 times a first female timbre) during interaction.

In this embodiment of this application, the identity information of the user may be obtained by logging in to the account, an interaction assistant with different attributes that is used to respond to the interaction command of the user is selected from the plurality of interaction assistants based on the identity information of the user, and human-computer interaction is performed by using the interaction assistant with different interaction attributes. This can meet personalized requirements of different users for human-computer interaction in different scenarios, and improve human-computer interaction experience of the user.

In an embodiment, the vehicle may obtain biometric feature parameter information (including facial information, iris information, or the like) of the user by using a camera in the vehicle. The vehicle may identify an identity of the user by using the biometric feature parameter information, select, from the plurality of interaction assistants, an interaction assistant used to respond to an interaction command of the user, and perform human-computer interaction with the user by using the interaction assistant.

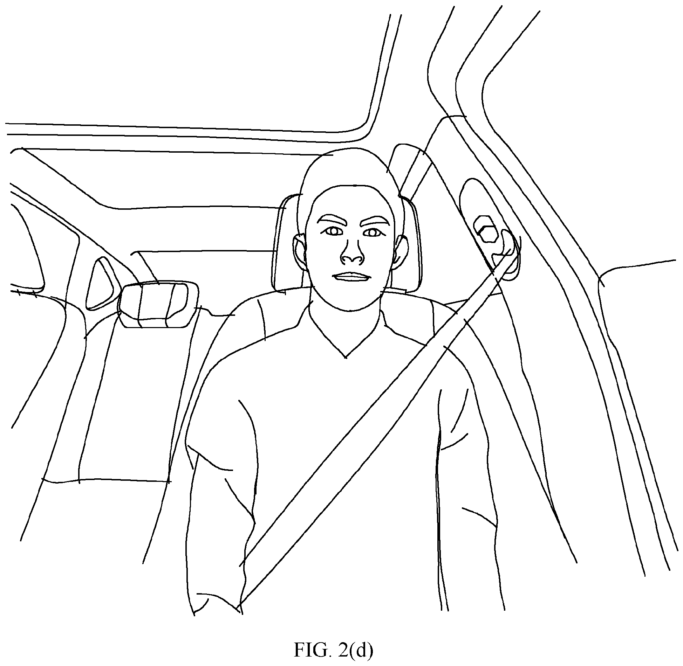

As shown in FIG. 2(d), after the user A enters the vehicle, the vehicle may identify biometric feature parameter information of the user by using a camera in a cockpit, to identify that the identity of the user is the user A. The identity of the user may be identified based on facial information of the user by using, for example, a detection technology such as an iris identification technology or a multi-modal detection technology.

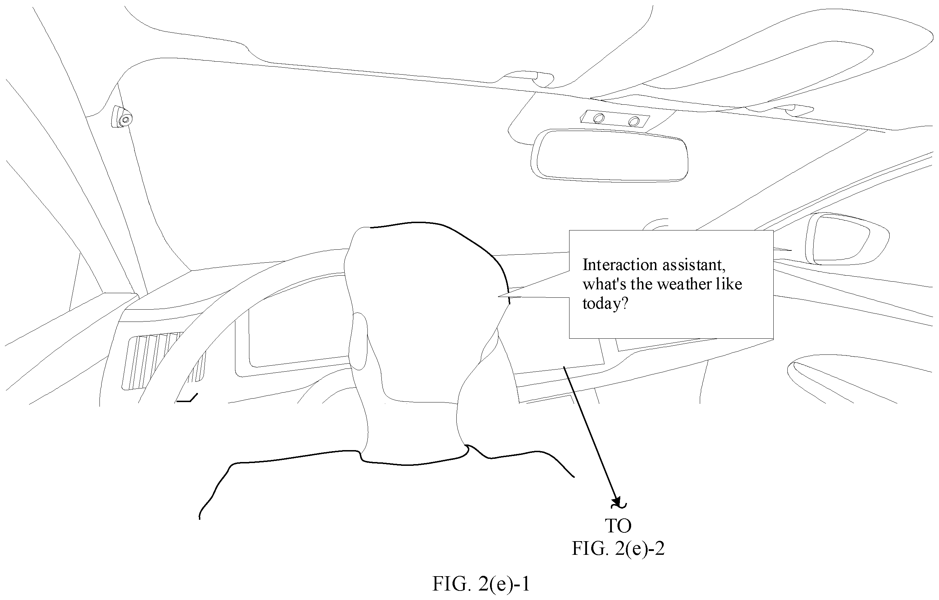

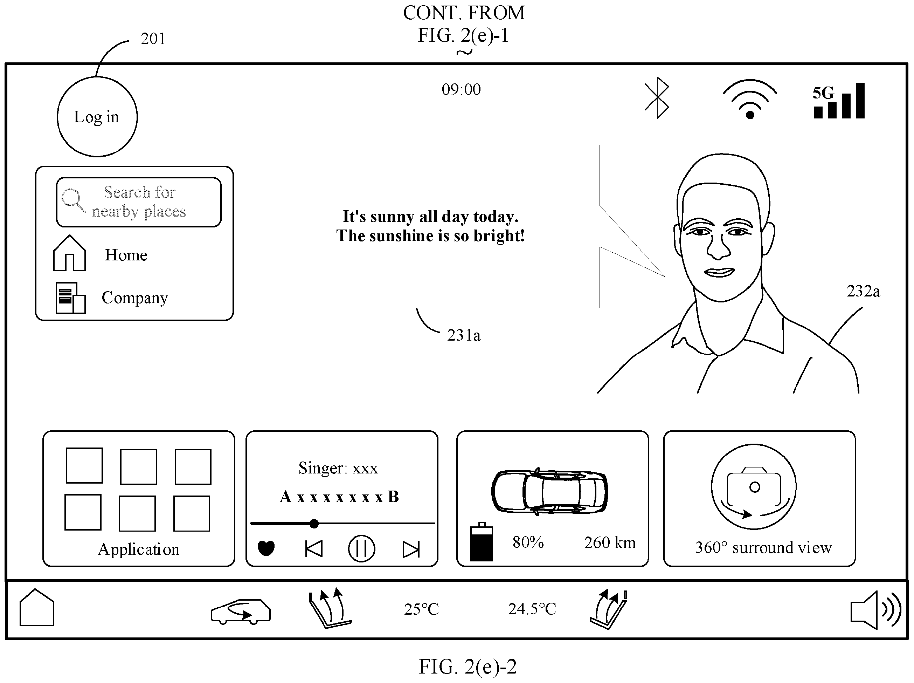

As shown in FIG. 2(e)-1 and FIG. 2(e)-2, after the vehicle identifies, by using the camera, that the identity of the user is the user A, the vehicle selects, from the plurality of interaction assistants, the interaction assistant 232a with a first interaction attribute that relatively matches the user A, to perform human-computer interaction. For a specific interaction assistant selection method, the method described in any possible implementation in text descriptions in FIG. 2(b)-1 and FIG. 2(b)-2 may be used. For brevity of description, details are not described herein again. In this way, user A can "communicate" with the interaction assistant without logging in to the account. For example, the user A sends a speech command "What's the weather like today?" to the interaction assistant 232a. The interaction assistant 232a may answer "It's sunny all day today. The sunshine is so bright!" During interaction, the interaction assistant 232a answers the question of the user A by using the first interaction attribute (a male character image, a normal interaction style, and a Shanghai dialect).

Similarly, the user B may also "communicate" with the interaction assistant without logging in to the account of the user B.

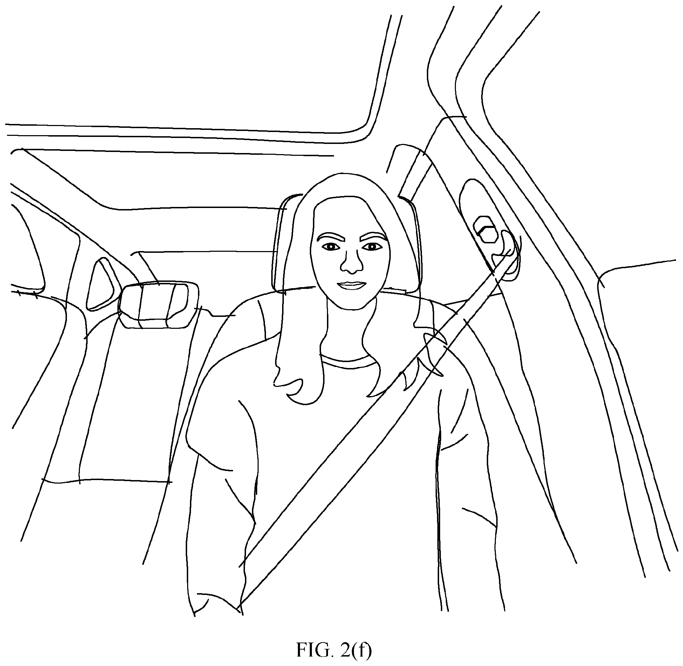

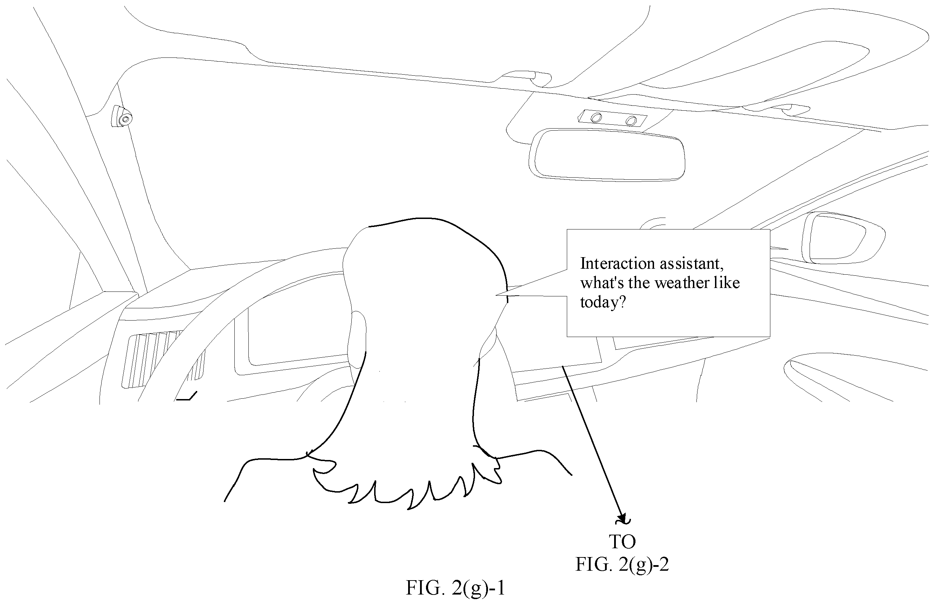

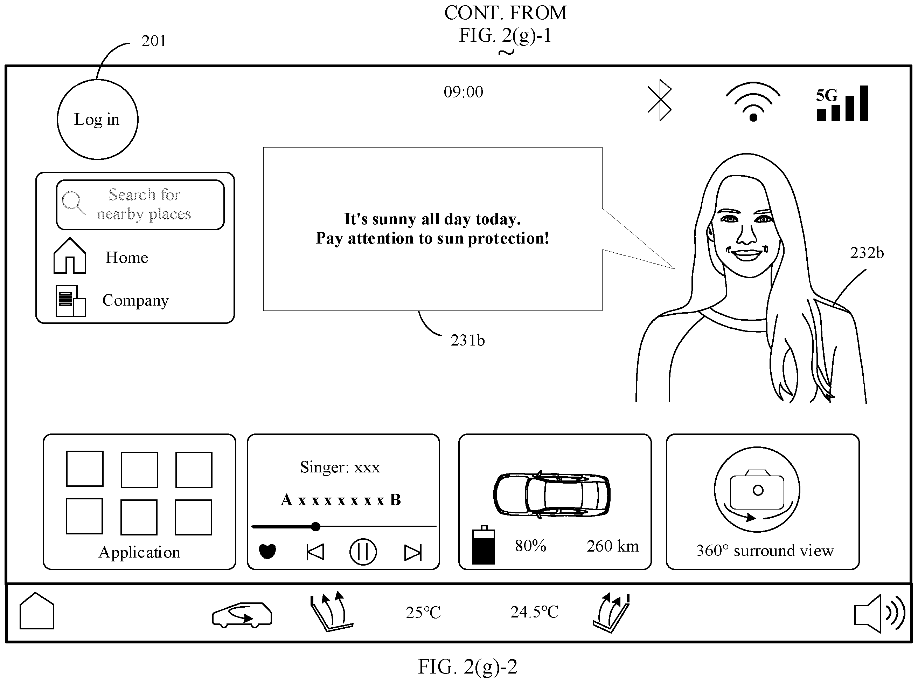

As shown in FIG. 2(f), after the user B enters the vehicle, the vehicle may identify biometric feature parameter information of the user by using a camera in a cockpit, to identify that the identity of the user is the user B. Then, as shown in FIG. 2(g)-1 and FIG. 2(g)-2, the vehicle may select, from the plurality of interaction assistants, the interaction assistant 232b that matches the user B to perform speech interaction with the user B. For a specific interaction assistant selection method, the method described in any possible implementation in text descriptions in FIG. 2(b)-1 and FIG. 2(b)-2 may be used. For brevity of description, details are not described herein again. When driving the vehicle, the user B may communicate with the interaction assistant 232b at any time. For example, the user B sends a speech command "What's the weather like today?" to the interaction assistant 232b. The interaction assistant 232b may answer "It's sunny all day today. Pay attention to sun protection!" The interaction assistant 232b answers the question of the user B by using the third interaction attribute (a female character image, a normal interaction style, and 1.2 times a first female timbre) during interaction.

In this embodiment of this application, the identity information of the user may be obtained by obtaining the biometric feature information of the user, an interaction assistant with different attributes that is used to respond to the interaction command of the user is selected from the plurality of interaction assistants based on the identity information of the user, and human-computer interaction is performed by using the interaction assistant with different interaction attributes. This can meet personalized requirements of different users for human-computer interaction in different scenarios, and improve human-computer interaction experience of the user.

In a possible implementation, the vehicle may further obtain voiceprint information of the user by using a voiceprint identification technology, and identify the user identity by using the voiceprint information, select, from the plurality of interaction assistants, an interaction assistant with different attributes and that is used to respond to the user interaction command, and perform human-computer interaction with the user by using the interaction assistant.

It should be understood that, when the vehicle identifies the identity of the user by using the voiceprint information of the user, and matches the interaction assistant for the user, the method described in any possible implementation in text descriptions in FIG. 2(b)-1 and FIG. 2(b)-2 may be used. For brevity of description, details are not described herein again.

In this embodiment of this application, the identity information of the user may be obtained by obtaining the voiceprint information of the user, an interaction assistant with different attributes that is used to respond to the interaction command of the user is selected from the plurality of interaction assistants based on the identity information of the user, and human-computer interaction is performed by using the interaction assistant with different interaction attributes. This can meet personalized requirements of different users for human-computer interaction in different scenarios, and improve human-computer interaction experience of the user.

It should be further understood that each user identity identification method described in this specification may be an independent solution, or may be combined based on internal logic. For example, the iris detection technology may be independently used, or may be used in combination with the voiceprint identification technology to identify the identity information of the user. For another example, the method for identifying the user identity by logging in to the account may be independently used, or may be used together with the multi-modal detection technology to identify the identity information of the user.

In an embodiment, for different users of the vehicle, the vehicle may select a relatively matched interaction assistant for each user in advance, and perform human-computer interaction with the different users of the vehicle by using the interaction assistant.

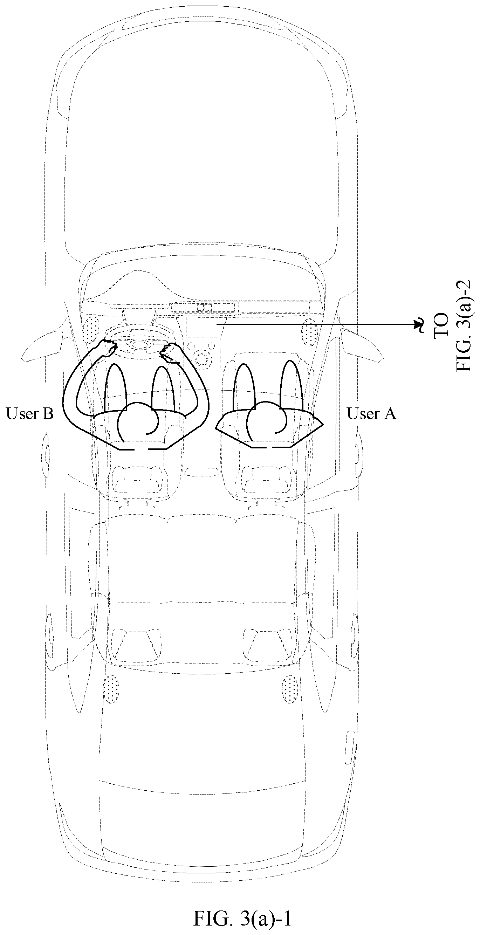

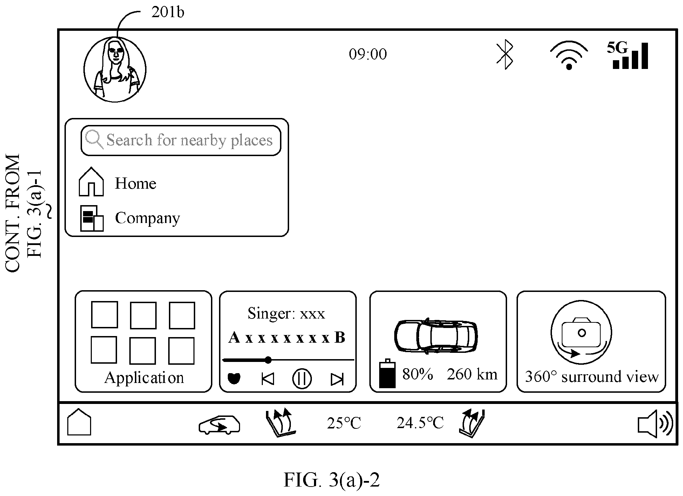

As shown in FIG. 3(a)-1 and FIG. 3(a)-2, a user B sits at a driver position, and a user A sits at a front passenger position in a vehicle. A login account displayed on a central control screen of the vehicle is an account of user B. In this case, the vehicle presets an interaction assistant 232b with a third interaction attribute for the user B, and performs human-computer interaction with the user B by using the interaction assistant 232b. Specific human-computer interaction is described in FIG. 2(c)-1 and FIG. 2(c)-2 and a text thereof, and details are not described herein again. In addition, the vehicle may identify, by using an iris identification technology or a voiceprint identification technology, that a user sitting at the front passenger position is the user A. After determining the identity of the user at the front passenger position, the vehicle may preset an interaction assistant 232a with a first interaction attribute for the user A, and perform human-computer interaction with the user A by using the interaction assistant 232a.

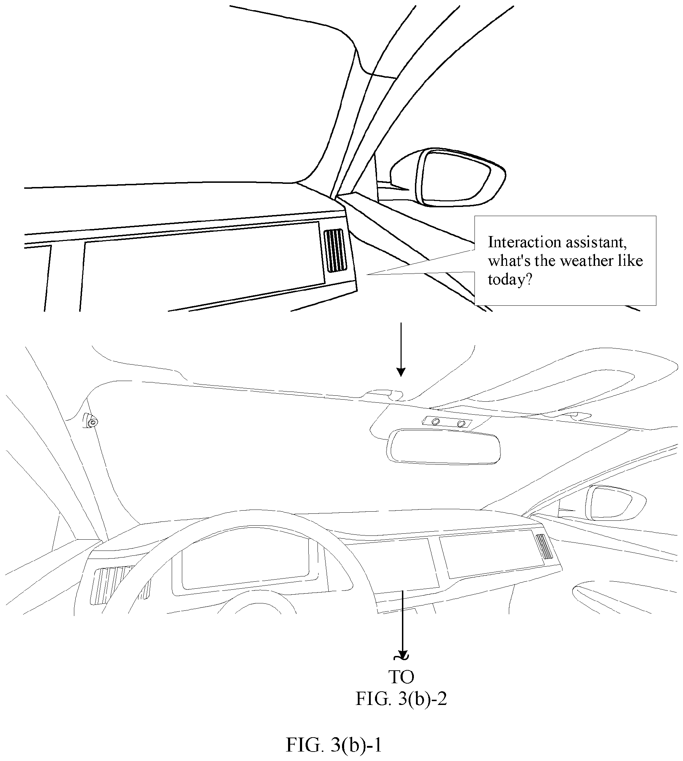

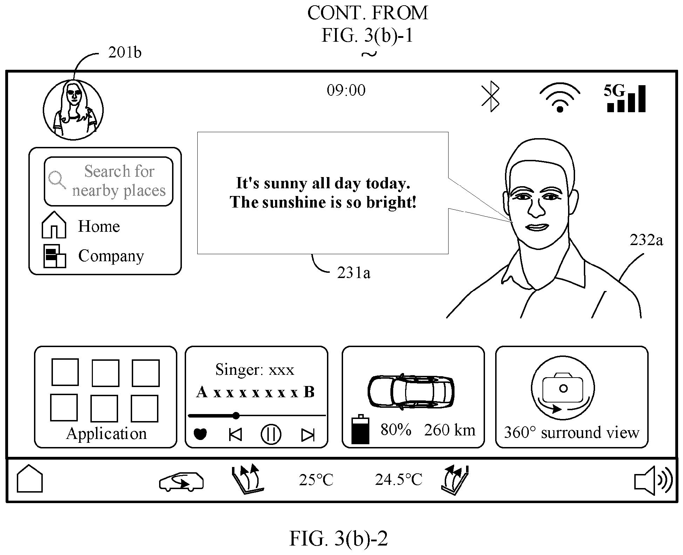

As shown in FIG. 3(b)-1 and FIG. 3(b)-2, the user A sitting at the front passenger position sends a speech command "What's the weather like today?" to the interaction assistant. In this case, the vehicle may determine, by using a camera in a cockpit, that the user A is at the front passenger position, and then switch to the interaction assistant 232a corresponding to the user A, to perform human-computer interaction with the user A. Specific human-computer interaction is described in FIG. 2(b)-1 and FIG. 2(b)-2 and a text thereof, and is not described herein again.

In addition, for users located at the driver position and the front passenger position, interaction manners of the interaction assistant and the user may also be different. For example, the interaction assistant 232b may interact with the user B at the driver position by using a head up display (head up display, HUD) of the vehicle. The interaction assistant 232a may interact with the user A by using an entertainment display at the front passenger position of the vehicle. For another example, the interaction assistant 232b may interact with the user B by using a headrest speaker at the driver position, and the interaction assistant 232a may interact with the user A by using a headrest speaker at the front passenger position of the vehicle. In this manner, when the interaction assistant interacts with the corresponding user, disturbance to another user can be reduced.

In this embodiment of this application, a relatively matched interaction assistant may be selected in advance for each user in the vehicle. After speech information sent by any user in the vehicle is detected, a corresponding interaction assistant is automatically switched to interact with the user. In this manner, personalized human-computer interaction requirements of different users in the vehicle can be met, and human-computer interaction experience of the user can be improved.

In an embodiment, different users of the vehicle may further perform human-computer interaction by using an interaction assistant corresponding to a logged-in account.

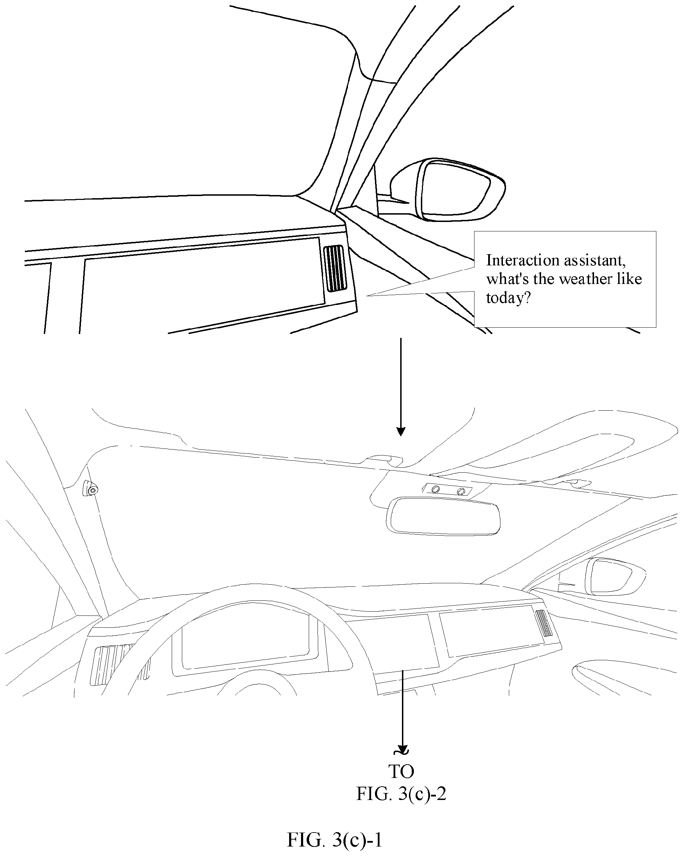

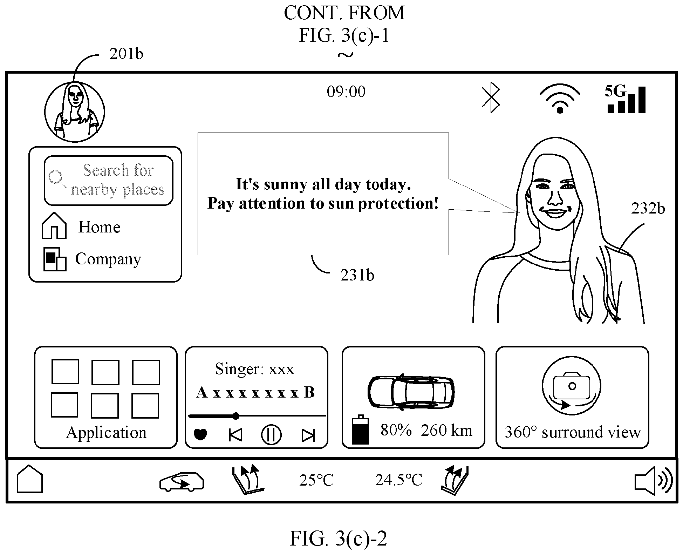

As shown in FIG. 3(c)-1 and FIG. 3(c)-2, an account of the user B is logged in to the central control screen of the vehicle, and all users of the vehicle may use the interaction assistant 232b (the interaction assistant corresponding to the user B) with the third interaction attribute to perform interaction. For example, the user A sitting at the front passenger position sends a speech command "What's the weather like today?" to the interaction assistant. The interaction assistant 232b may answer "It's sunny all day today. Pay attention to sun protection!" The interaction assistant 232b answers the question of the user A by using the third interaction attribute (a female character image, a normal interaction style, and 1.2 times a first female timbre) during interaction.

In this embodiment of this application, in a process in which the interaction assistant 232b (the interaction assistant corresponding to the user B) is used for interaction, an interaction command sent by the user A is obtained, and the interaction assistant 232b may be used to interact with the user A. In this manner, no interaction assistant needs to be matched for the user A in advance, and a more flexible human-computer interaction mode can be provided.

In an embodiment, if a driver of the vehicle is changed, the interaction assistant may perform switching based on identity information of the driver, to perform personalized human-computer interaction.

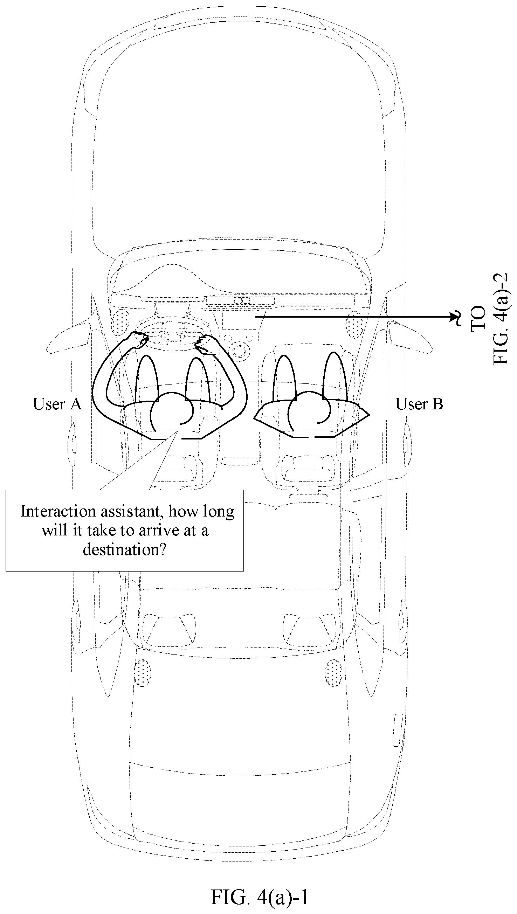

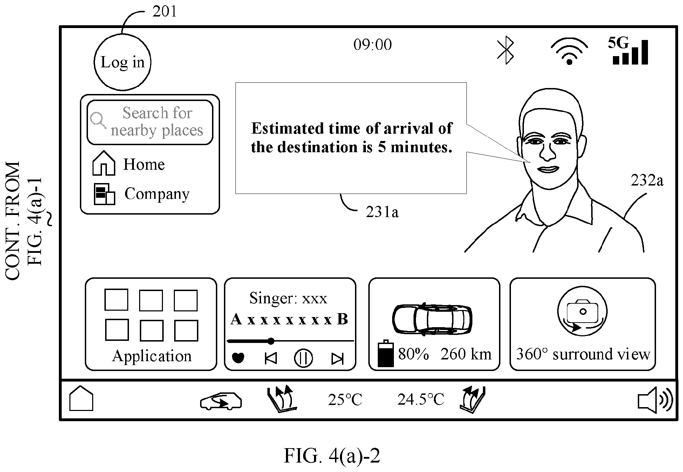

As shown in FIG. 4(a)-1 and FIG. 4(a)-2, when a vehicle starts driving, a driver is a user A, a user B is at a front passenger position, and no user account is logged in to on a central control screen of the vehicle. In this case, the vehicle may determine, by using an iris recognition technology or a sound recognition technology, that an identity of the driver is the user A, and select an interaction assistant 232a to interact with the user A. For example, the user A asks the interaction assistant "How long will it take to arrive at a destination?" The interaction assistant 232a may answer "Estimated time of arrival of the destination is 5 minutes". During interaction, the interaction assistant 232a answers the question of the user A by using a first interaction attribute (a male character image, a normal interaction style, and a Shanghai dialect).

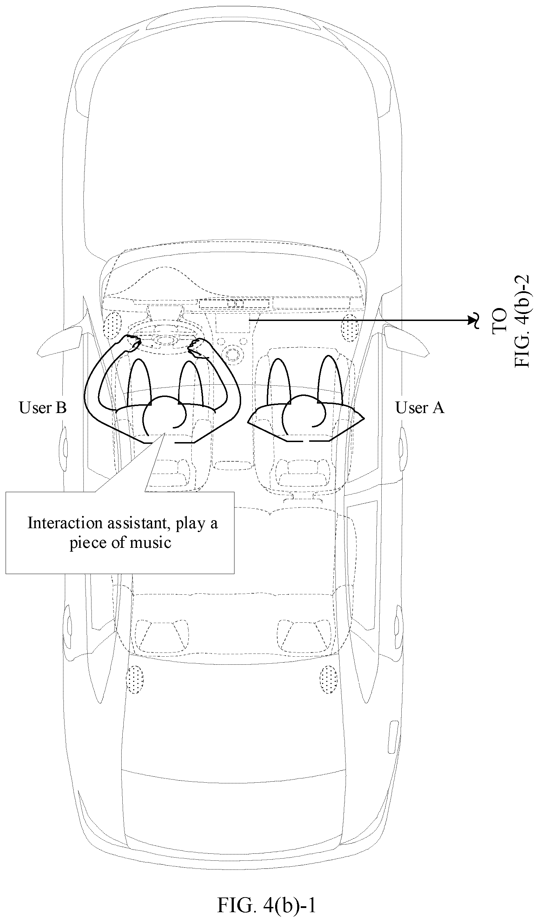

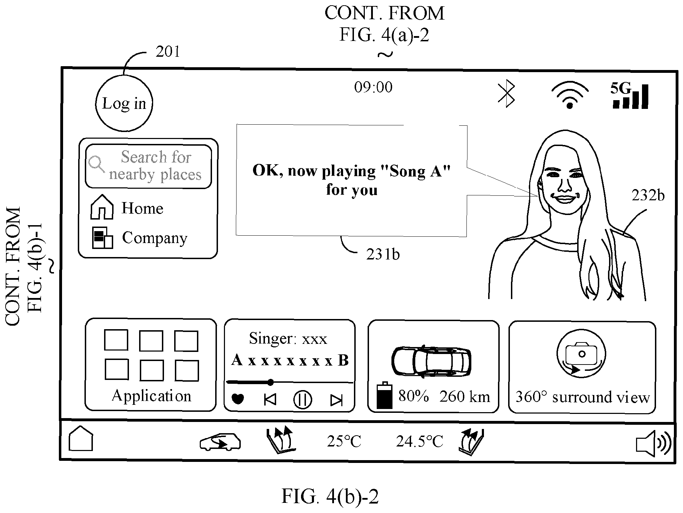

As shown in FIG. 4(b)-1 and FIG. 4(b)-2, the driver of the vehicle is changed, a new driver is the user B, and the user A is at the front passenger position. In this case, the vehicle may determine, by using a facial recognition or sound recognition technology, that an identity of the new driver is the user B, and select an interaction assistant 232b to interact with the user B. For example, the user B sends a speech command "Interaction assistant, play a piece of music" to the interaction assistant 232b, and the interaction assistant 232b may answer "OK, now playing "Song A" for you". The interaction assistant 232b answers the question of the user B by using a third interaction attribute (a female character image, a normal interaction style, and 1.2 times a first female timbre) during interaction.

In this embodiment of this application, an interaction assistant may be matched for different driver users. After the driver of the vehicle is changed, the interaction assistant may perform switching based on identity information of the driver, to perform personalized human-computer interaction.

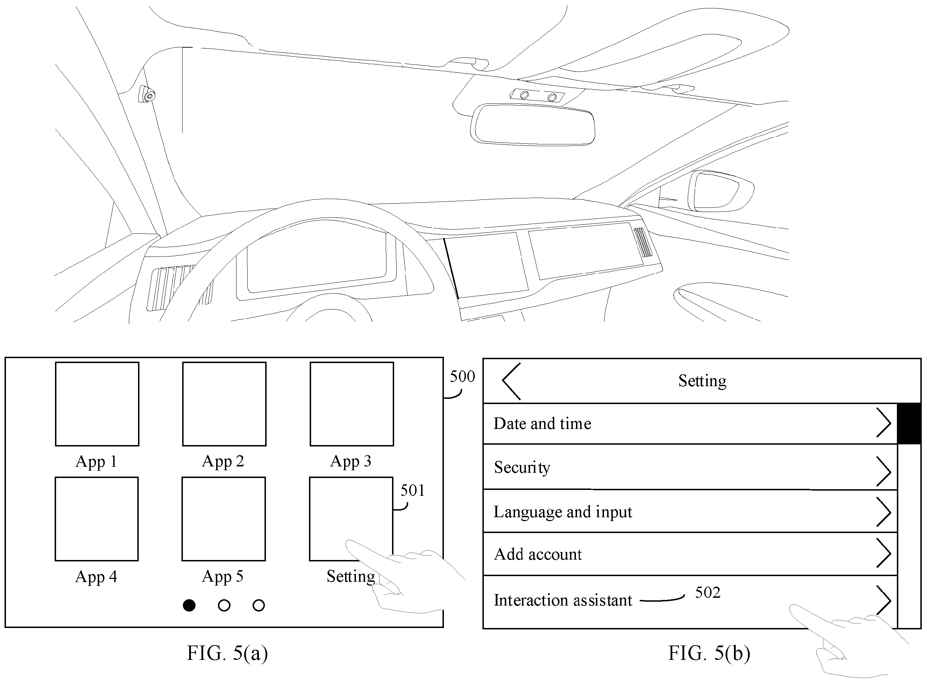

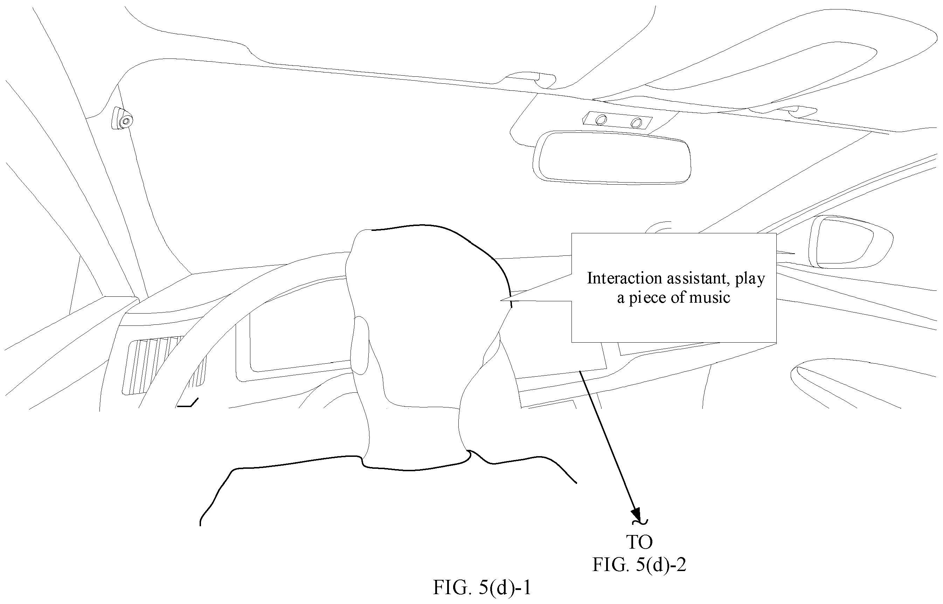

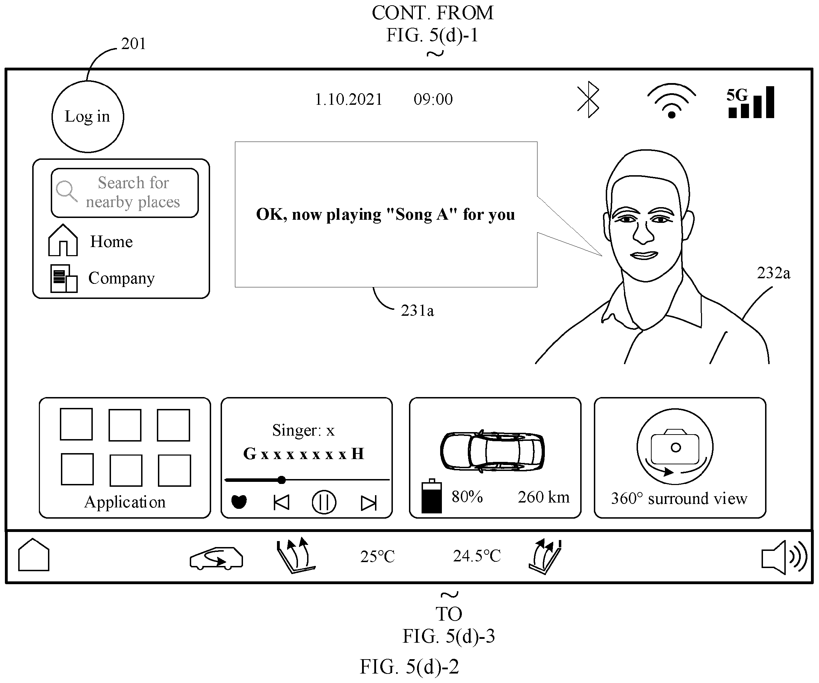

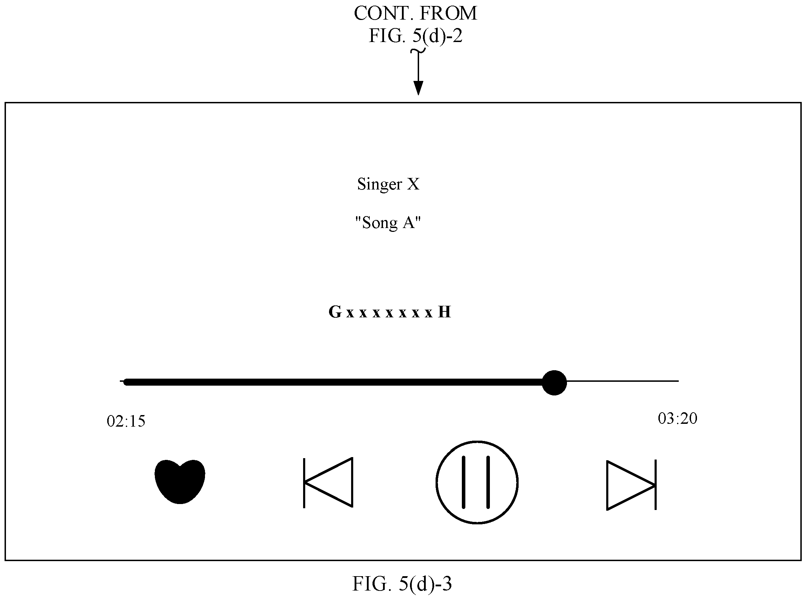

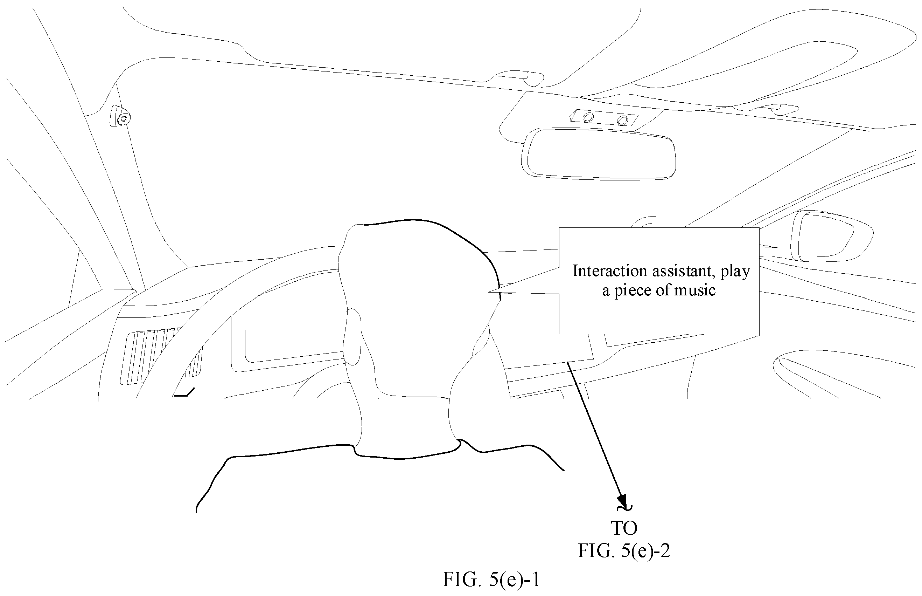

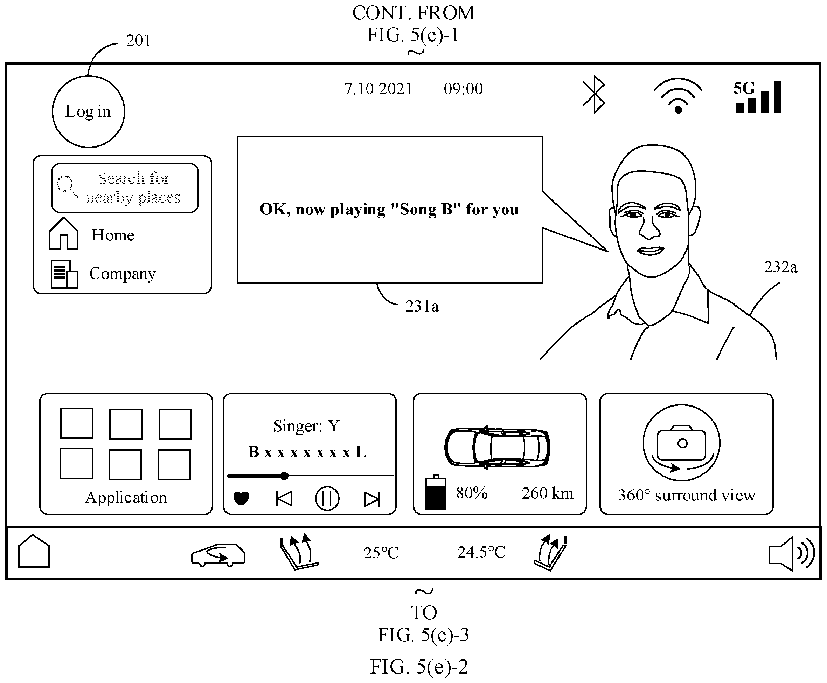

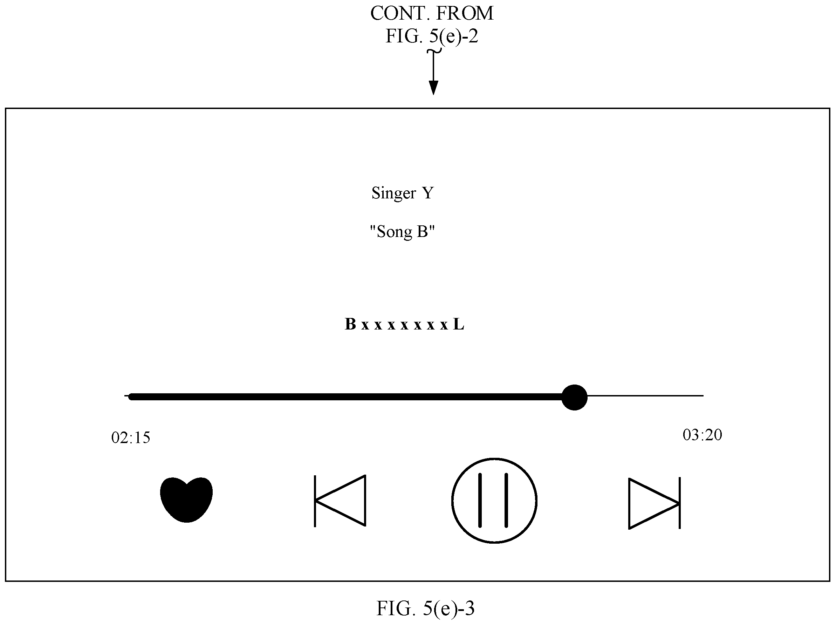

FIG. 5(a) to FIG. 5(e)-3 are a schematic diagram of a group of example graphical user interfaces according to an embodiment of this application.

As shown in FIG. 5(a), the graphical user interface (graphical user interface, GUI) is a desktop displayed on a desktop of a central control screen of a vehicle. The desktop includes icons of a plurality of applications and a setting icon 501. When the vehicle detects an operation that the user taps the icon 501, the vehicle may display a GUI shown in FIG. 5(b).

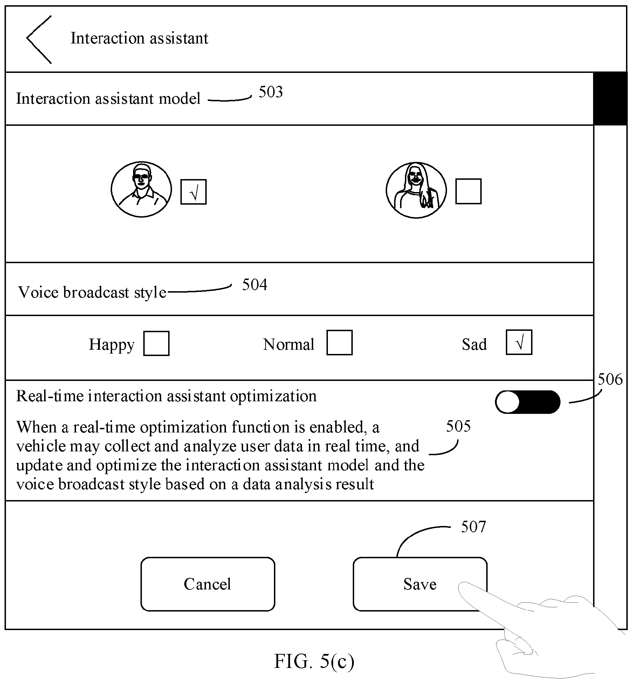

The GUI shown in FIG. 5(b) is a function setting interface. The function setting interface includes an interaction assistant control and setting options of date and time, security, language and input, add account, and an interaction assistant control. When the vehicle detects an operation that the user taps the interaction assistant control 502, the vehicle may display a GUI shown in FIG. 5(c).

The GUI shown in FIG. 5(c) is an interaction assistant setting interface. The interaction assistant setting interface includes an interaction assistant model option 503, a voice broadcast style option 504, a real-time interaction assistant optimization option 505, an enabling or disabling a real-time interaction assistant optimization function option 506, a save control 507, and a cancel control. The user may tap an interaction assistant model avatar in the interaction assistant model option 503, to actively select an interaction assistant model. The user may further select a voice broadcast style in the voice broadcast style option 504. In addition, the user may further enable or disable a real-time interaction assistant optimization function by using the option 506. When the real-time interaction assistant optimization function is enabled, the vehicle may collect and analyze human-computer interaction data of the user in real time, and update and optimize the interaction assistant model and the broadcast style based on a data analysis result. After the foregoing interaction assistant setting is completed, the user may tap the save control 507 to save the interaction assistant setting of the user.

In an embodiment, after the user completes the interaction assistant setting based on a preference of the user, the vehicle may update the interaction assistant setting in real time based on a status of interaction between the user and the interaction assistant in a time period, and adjust a corresponding voice broadcast style.

For example, at 9 a.m. on October 1, 2021, the user A sets the voice broadcast style to happy in the GUI shown in FIG. 5(c). Then, as shown in FIG. 5(d)-1 to FIG. 5(d)-3, the user A sends a speech command "Interaction assistant, play a piece of music" to the interaction assistant 232a, and the interaction assistant may answer "OK, now playing "Song A" for you". The "Song A" is a sad song.

The vehicle collects a speech command (for example, an acoustic parameter or a sound emotion) of the user or collects facial expression information of the user in a week, to analyze an emotion status of the user. It is concluded that a frequency of a happy emotion state of the user A is higher than a preset frequency. The vehicle may automatically adjust the broadcast style of the interaction assistant from sad to happy.

For example, as shown in FIG. 5(e)-1 to FIG. 5(e)-3, at 9 a.m. on October 7, 2021, after the vehicle adjusts the voice broadcast style to happy, the user A sends a speech command "Interaction assistant, play a piece of music" to the interaction assistant 232a, and the interaction assistant may answer "OK, now playing "Song B" for you". The "Song B" is a happy song.

In this embodiment of this application, the user may set the model and the voice broadcast style of the interaction assistant based on a preference of the user, and choose whether to enable the real-time interaction assistant optimization function. In this manner, when the user chooses not to enable the real-time interaction assistant optimization function, the vehicle does not collect user data for model training, so that user privacy can be protected. In addition, when the user chooses to enable the real-time interaction assistant optimization function, the interaction assistant can perform optimization based on user feedback, improving human-computer interaction experience of the user.

In the foregoing embodiments, the interaction assistant can be obtained in different manners. For example, the interaction assistant may be downloaded from a network and installed on a terminal device. For another example, the interaction assistant may be obtained through training based on historical user data. A training process may be collecting speech information of the user in a time period or at a frequency, and inputting the speech information into a neural network model for training. Output of the neural network model may be different response manners of the interaction assistant, an expression of the interaction assistant model, a body movement of the interaction assistant model, and the like.

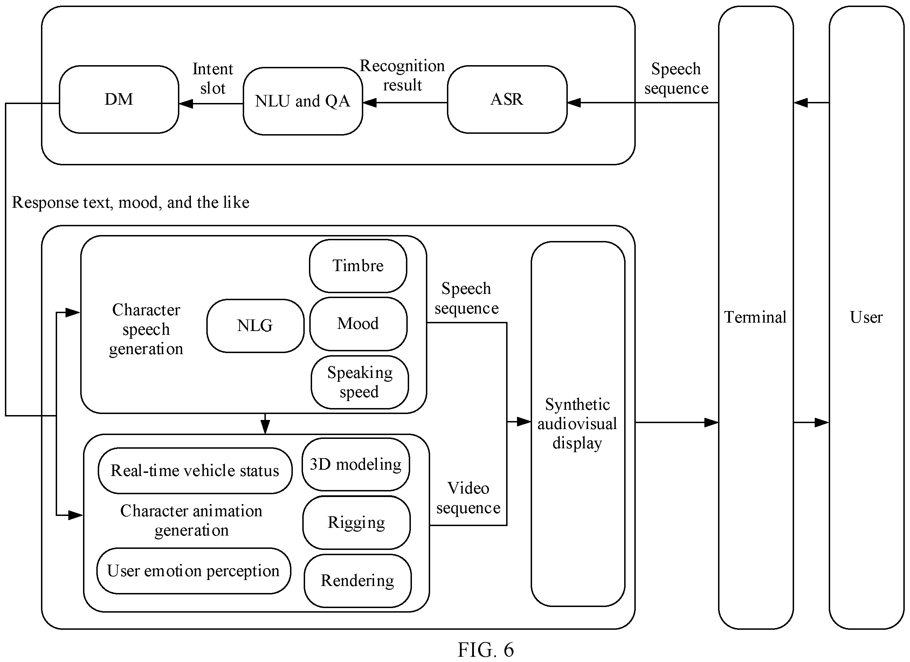

In the foregoing embodiments, after personalized interaction assistants are customized for different users, the interaction assistant may further adjust a voice broadcast mode in real time based on a real-time emotion status of the user and/or a driving status of the vehicle, to provide the user with humanized interaction experience. The following describes the process in detail with reference to FIG. 6 to FIG. 14. It should be understood that a voice assistant described in FIG. 6 to FIG. 14 and the following text is one type of interaction assistant.

FIG. 6 is an architectural diagram of a voice assistant system according to an embodiment of this application. The architecture of the voice assistant system in FIG. 6 may be applied to the vehicle 100 in FIG. 1.

As shown in FIG. 6, the architecture of the in-vehicle voice assistant system may be divided into two parts: speech generation and animation generation. When a user uses the in-vehicle voice assistant system, the user first sends a command to a terminal device. After receiving the user command, the terminal device generates a speech sequence based on the user command, and sends the generated speech sequence to a semantic understanding model. After processing, the semantic understanding model generates content such as a response text and a mood, and sends the content to a speech generation part and an animation generation part of the in-vehicle voice assistant. After processing the response text and the mood, the speech generation part generates a speech sequence with a specific timbre, mood, and intonation, and sends the obtained speech sequence to a synthetic audiovisual display module in the vehicle-mounted voice assistant system. The animation generation part processes the response text and the mood, generates a video sequence, and sends the video sequence to the synthetic audiovisual display module. After processing the speech sequence and the video sequence, the synthetic audiovisual display module generates an animation video, and then the terminal device feeds back the animation video to the user. In this way, voice broadcast and an animation image are customized based on a user interaction emotion and a real-time status of a vehicle, providing the user with humanized interaction experience.

The following describes in detail the architecture of the in-vehicle voice assistant system with reference to the speech generation part and the animation generation part in the in-vehicle voice assistant system architecture.

(1) Speech generation part

A main source of speech generation may be a text output by both an acoustic model and a semantic understanding model of a voice assistant.

The acoustic model of the voice assistant is mainly from a default preset setting of the system. The default preset setting of the system may include a size attribute and a feature of a vehicle, a user setting, and the like. In addition, in a process of interacting with the user, the voice assistant may correspondingly adjust a mood, a timbre, and a speaking speed based on a real-time emotion status of the user and a driving status of the vehicle. For example, when a user mood is out of control, the voice assistant may slow down a speaking speed of human-computer interaction, and provide a softer mood and a sweeter timbre, to soothe a user mood and provide the user with humanized interaction experience. For another example, when a driving condition of the vehicle is not good, the voice assistant may increase a speaking speed of human-computer interaction, and present an excited mood and serious timbre, to remind the user to timely adjust a driving policy or repair the vehicle, ensuring driving safety of the user.

The semantic understanding model may include: an automatic speech recognition (automatic speech recognition, ASR) module, a natural language understanding (natural language understanding, NLU) module, an open-domain question answering (open-domain QA) module, and a dialog manager (dialog manager, DM) module. After receiving the speech sequence from the terminal device, the ASR module processes and converts the speech sequence into a text, and outputs a processing result to the NLU and QA modules. The NLU and QA modules parse the user speech sequence, perform corresponding answering and inference, and input to the DM module for dialog management. In a dialog management process, the DM module can use an emotional factor of the user in a real-time user interaction process, a real-time parameter of the vehicle in a vehicle driving process, and a driving environment of the vehicle that are detected by using a multi-modal technology. The DM module analyzes the user emotion and vehicle driving status, regenerates, based on a dialog response text generated by an original model, a new dialog response text that is more suitable for a user status in a current environment.

After receiving the text with moods, the character speech generation part generates, by using the built-in NLG module of the character speech generation part, the speech sequence with different moods, speaking speeds, and timbres, and outputs the speech sequence to the synthetic audiovisual display module. Finally, corresponding to different application scenarios, the speech generation part generates, with reference to a parameter generated by the acoustic model, response manners with different moods, speaking speeds, and timbres.

(2) Animation generation part

After receiving the text with moods, the character animation generation part generates a character animation from three aspects: 3D modeling, rigging, and rendering based on a real-time status of the vehicle and perception of the emotion status of the user, and outputs a generated video sequence to the synthetic audiovisual display module. After receiving the speech sequence and the video sequence, the synthetic audiovisual display module regenerates, based on an original dialog response text, a new dialog response text that is more suitable for a user status in a current environment. Finally, response manners with different moods, speaking speeds, and timbres are generated based on the parameters generated by the acoustic model.

It should be understood that the animation generation part may alternatively be an image information generation part. The image information generation part may generate image information such as a picture, a character, or an animation expression, and display the image information during voice broadcast.

In this embodiment of this application, voice broadcast may be performed based on the emotion status of the user and the real-time status of the vehicle, and image information is displayed during voice broadcast, to provide the user with more human-friendly human-computer interaction experience.

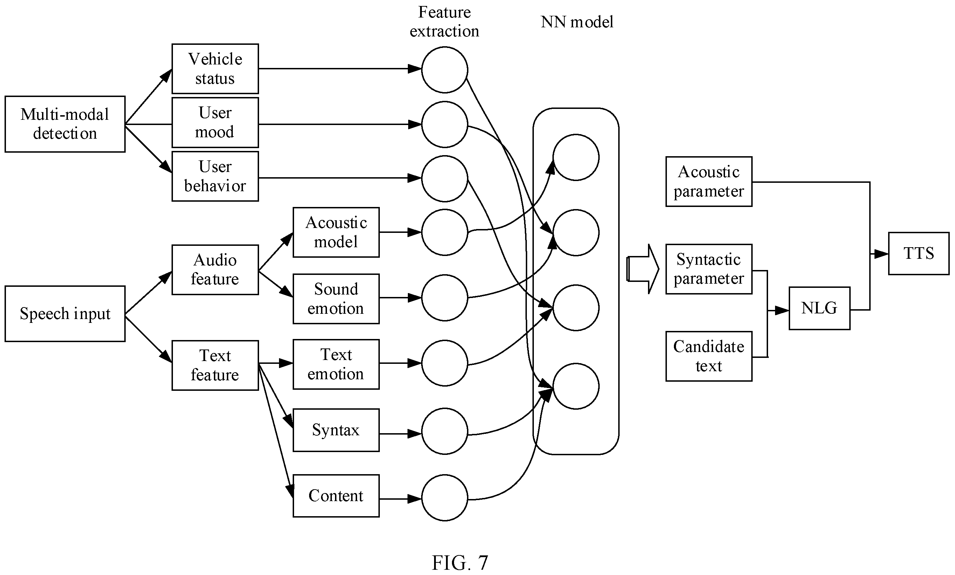

FIG. 7 is a flowchart of voice broadcast of a voice assistant according to an embodiment of this application.

As shown in FIG. 7, voice broadcast of the voice assistant may include speech input and a multi-modal detection status. Features of the speech input may be classified into an audio feature and a text feature. The audio feature may include an acoustic model, a sound emotion, and the like. The text feature may include a text emotion, syntax, content, and the like. A main consideration factor of multi-modal detection may be a user emotion, a user behavior habit, a vehicle status, or the like.

A main voice broadcast process of the voice assistant is to extract a feature from sub-items of multi-modal detection and speech input, then input the extracted feature into an NN model for training, to generate an acoustic parameter, a syntactic parameter, and a candidate text, and finally generate a broadcast text based on the acoustic parameter, the syntactic parameter, and the candidate text for voice broadcast. The broadcast text is generated by using a natural language processing module (NLP) and a syntactic parameter obtained through multi-element calculation. A final voice broadcast result is finally obtained by combining the announcement text with the acoustic parameter of the voice assistant. The final voice broadcast result may be used to answer a question raised by a user by using a specific acoustic parameter in a real-time status scenario. The acoustic parameter may include a speaking speed, an intonation, a pitch, a timbre, a volume, a rhythm, and the like.

It should be understood that in this embodiment of this application, when the voice assistant performs voice broadcast, reference is made to a knowledge base and a semantic model that are commonly used by an existing voice assistant. In addition, an emotion status of the user and a driving status of a vehicle are used as two important factors that affect the voice broadcast result.

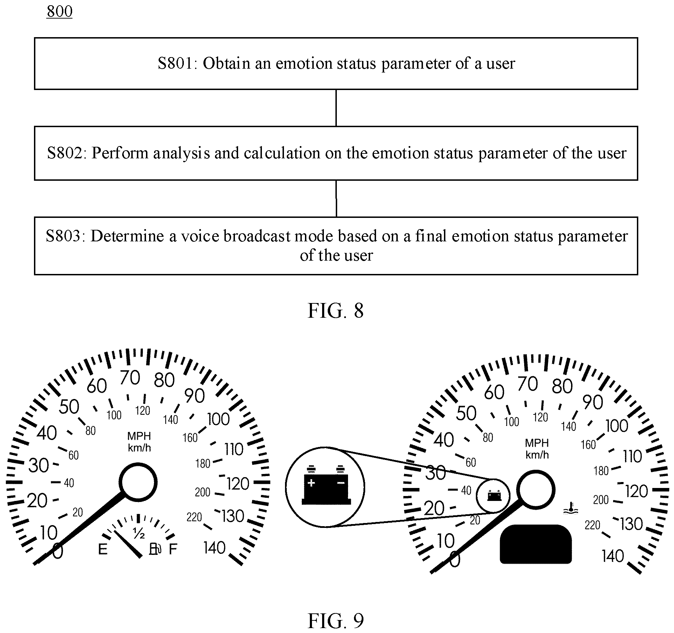

FIG. 8 is a flowchart 800 of detecting a user emotion by a voice assistant according to an embodiment of this application. The method 800 may be applied to the vehicle 100 in FIG. 1, or may be applied to the architecture of the voice assistant system in FIG. 6. The method 800 may include the following steps.

S801: Obtain an emotion status parameter of a user.

Currently, emotions can be classified into happiness, sadness, anger, and disgust based on human facial expressions. A multi-dimensional vector may be used to represent an emotion status of the user. To be specific, different combinations of emotion dimensions correspond to emotion space of different dimensions. Each emotion dimension should have a value range, and a value of the emotion dimension may be at any position within the value range. Any emotion may be represented by using a group of values, and the group of values represents a position of the emotion in the dimensional emotion space.

After the emotion status of the user is classified, an emotion status parameter of the user may be obtained. The emotion status parameter indicates the emotion status of the user. For example, the emotion status parameter of the user may be obtained in the following three manners.

(1) Multi-modal face detection

Multi-modal face detection may be implemented based on user facial mood recognition and a fatigue detection technology. Multi-modal face detection may enable a computer to better understand a real-time mood status of the user in a driving process, to create a more friendly human-computer interaction process. For example, in the driving process of the vehicle, a built-in camera of the vehicle may be used to recognize a face of the user, to determine a facial mood or a fatigue state of the user. In this way, the emotion status of the user is obtained.

In this embodiment of this application, facial expression information of the user may be obtained based on multi-modal face detection, and the emotion status of the user is determined based on first speech information and the facial expression information of the user. The first speech information may be an input speech of the voice assistant.

(2) Speech emotion analysis

Speech emotion analysis may be performed by using a commonly used machine learning classifier and spectrogram, and a deep learning model. A training dataset may use a discrete speech emotion dataset.

In this embodiment of this application, a speech emotion status may be determined by performing speech emotion analysis on speech information input by the user, and the emotion status of the user is determined based on the speech emotion status.

(3) Text emotion analysis

During text emotion analysis, the emotion status of the user is obtained based on a degree value of a degree adverb (a positive value indicates intensified, negative value indicates negative) multiplied by an emotion value of an emotion word. Examples of various words are as follows:

Emotion word: In speech information sent by the user, namely, "I like the interaction assistant" or "I hate the interaction assistant", "like" and "hate" in the speech information are emotion words.

Degree adverb: In speech information sent by the user, namely, "I really like the interaction assistant" or "I extremely hate the interaction assistant", "really" and "extremely " in the speech information are degree adverbs.

Negative word: In speech information sent by the user, namely, "I do not hate the interaction assistant", "do not hate" in the speech information is a negative word.

Stop word: may be a word that is completely useless or meaningless. For example, in speech information sent by the user, namely, "I actually like the voice assistant", "actually" is a stop word.

In addition, when text emotion analysis is performed, a text may be represented as a multi-dimensional vector with reference to a depth model algorithm, and a multi-classification result is obtained through model inference.

In this embodiment of this application, second text information corresponding to the first speech information may be obtained, and text emotion analysis is performed on the second text information, to obtain the emotion status of the user.

It should be understood that the emotion status of the user may be indicated by the emotion status parameter, or may be indicated in another manner. For example, the emotion status of the user may be classified into different levels, and emotion statuses of the user is indicated by using different levels.

It should be further understood that the methods for obtaining the user mood described in this specification may be independent solutions, or may be combined based on internal logic. For example, multi-modal face detection may be performed independently, or may be performed together with speech emotion analysis, to obtain the emotion status of the user. For another example, speech emotion analysis may be performed independently, or may be performed together with text emotion analysis, to obtain the emotion status of the user.

S802: Perform analysis and calculation on the emotion status parameter of the user.

There are a plurality of emotion representation forms of the user in a vehicle driving scenario. Therefore, the emotion status parameter of the user may be obtained in step S801, multi-dimensional emotion analysis is performed on the obtained emotion status parameter of the user, and a final emotion status parameter is finally obtained through weighting.

Specifically, the emotion status parameter e of the user may be analyzed and calculated by using the following formula:

$$e = \sum_{i=1}^{3} e_i \cdot \alpha_i$$

e is a final result of analysis and calculation for the emotion status parameter of the user. $\sum_{i=1}^{3} \alpha_i = 1$. $e_i$ is an n-dimensional vector. n is a number of emotion classifications. $e_1$ is a multi-modal facial expression analysis result, $e_2$ is a speech emotion analysis result, and $e_3$ is a text emotion analysis result.

It should be understood that, an inaccurate data result may exist in the obtained emotion status parameter of the user. Analysis and calculation on the emotion status parameter of the user are performed in this step, to compensate for the obtained data result to obtain an accurate data result. This facilitates the voice assistant to perform subsequent voice broadcast. If a data result of the obtained emotion status parameter of the user is relatively accurate, step S802 may not be performed, and step S803 is directly performed.

S803: Determine a voice broadcast mode based on a final emotion status of the user.

Specifically, a voice assistant model matches the user emotion by using a mirror mood by default and has a positive emotion bias. The matching the user emotion by using a mirror mood may be understood as a response policy of the voice assistant is positively correlated to the user emotion. For example, when the user is happy, a speaking speed and rhythm of voice broadcast are increased, a tone becomes higher, and a corresponding positive response text is generated. When the user is sad or angry, a speaking speed of voice broadcast is reduced, and an acoustic parameter corresponds to a negative mood, and a text is generated mainly for comfort and encouragement.

In step S803, an emotion status analysis result of the user obtained in step S802 may be compared with a first threshold, to adjust a response mode of the voice assistant based on the final emotion status of the user. When the emotion status analysis result of the user is less than the first threshold, a corresponding emotion policy of the speech model is a default mode, that is, the speech model matches the user emotion by using the mirror mood and has a positive emotion bias. For example, the speaking speed, the intonation, a pitch, a volume, a timbre, and the rhythm of voice broadcast may be set to be positively correlated to the emotion status parameter. When the emotion status analysis result of the user is greater than or equal to the first threshold, a corresponding emotion policy of the speech model is an adversarial policy, that is, the response policy of the voice assistant is negatively correlated to the user emotion. For example, the speaking speed, the intonation, a volume, a pitch, a timbre, and the rhythm of voice broadcast are set to be negatively correlated to the emotion status parameter. In this manner, when the user mood reaches the first threshold, the voice assistant may soothe a user mood, to prevent a dangerous driving behavior caused by an over-excited mood.

It should be understood that a specific value of the first threshold may be preset based on an actual situation. For example, if the user is a female user, the first threshold may be set to a larger value; if the user is a male user, the first threshold may be set to a smaller value.

In this embodiment of this application, the voice assistant may obtain the emotion status parameter of the user by using different methods, analyze and calculate the obtained emotion status parameter of the user to obtain the final emotion status parameter of the user, and adjust the voice broadcast mode of the voice assistant based on the final emotion status parameter of the user, to provide the user with more human-friendly human-computer interaction experience.

FIG. 9 is a schematic diagram of vehicle status detection content according to an embodiment of this application. The vehicle status detection content in FIG. 9 may be applied to the vehicle 100 in FIG. 1.

In this embodiment of this application, a vehicle status parameter may be obtained, and the obtained status parameter is used as input of a generation model of a voice assistant, to perform personalized voice broadcast. The vehicle status parameter may include a vehicle driving status parameter and an external environment parameter of a vehicle.

The vehicle driving status parameter may be obtained by using a dashboard of the vehicle. As shown in FIG. 9, in a driving process of the vehicle, the dashboard of the vehicle may provide an attribute parameter of the vehicle. For example, the dashboard of the vehicle provides a vehicle speed, a vehicle battery level, and some safety prompt information. The external environment parameter of the vehicle may be reflected by using a road surface condition and a weather condition in the driving process of the vehicle. For example, road surface flatness or a lane width may be used as the external environment parameter of the vehicle.

After the vehicle status parameter is obtained, the status parameter may be represented as a multi-dimensional vector. The multi-dimensional vector may affect generation of broadcast text content and generation of an acoustic parameter. For example, when the vehicle is driving on an expressway, a voice assistant speaking manner is more relaxed and active. When the vehicle is driving on a congested road section in peak hours, a voice assistant speaking manner is more subdued, reflecting that the voice assistant is in a poor mood. When the vehicle has a relatively low battery level, the voice assistant speaks at a slow speed, reflecting that the voice assistant is weak and powerless.

In this embodiment of this application, after obtaining the vehicle status parameter, the voice assistant may perform voice broadcast based on the emotion status of the user and the vehicle status parameter. In this way, voice broadcast meets an emotional requirement of the user, caters to a driving status of the user, and further improves voice broadcast experience of the user.

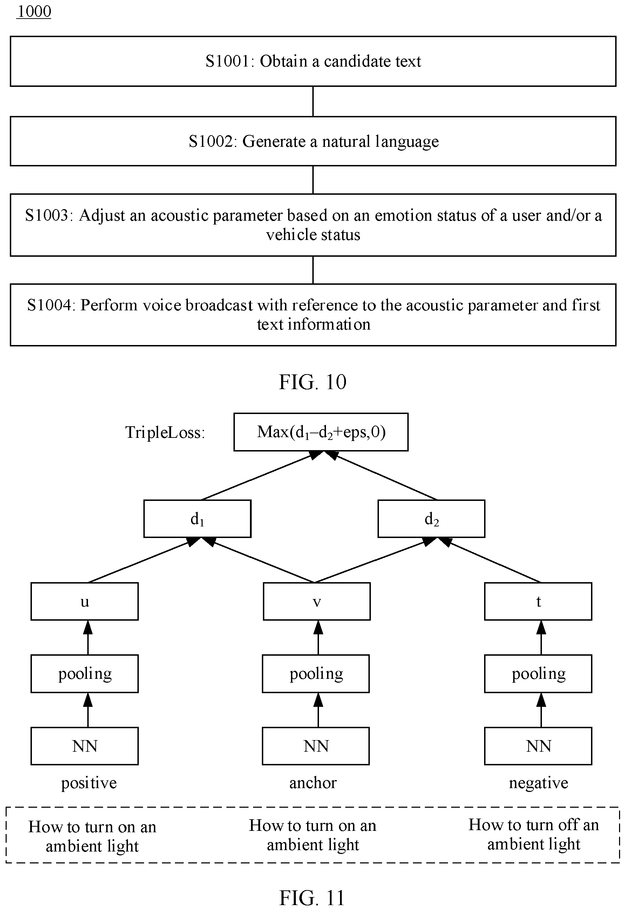

FIG. 10 is a flowchart of a voice broadcast policy of a voice assistant according to an embodiment of this application. The voice broadcast policy 1000 of the voice assistant in FIG. 10 may be applied to the vehicle 100 in FIG. 1, and the policy 1000 may include the following steps.

S1001: Obtain a candidate text.

Specifically, a candidate text of a question-answering (QA) dialog of the voice assistant may be obtained by combining NN inference and index search. For example, when a user raises a question, the voice assistant obtains first speech information of the user. The voice assistant may analyze the first speech information by using an NN inference model and an index search model, and separately generate a candidate text. After filtering, the voice assistant may reserve a most suitable candidate text for subsequent steps.

S1002: Generate a natural language.

Specifically, a corresponding syntactic parameter may be obtained through calculation by using a deep learning model, to generate the natural language. First text information may be obtained after NLG processing is performed on the syntactic parameter based on the candidate text. The first text information is a broadcast text for the first speech information.

S1003: Adjust an acoustic parameter with reference to an emotion status of the user and/or a vehicle status.

Specifically, the acoustic parameter may be adjusted by using an emotion result of the user and the vehicle status based on vehicle presetting and user presetting.

The acoustic parameter may include a speaking speed, an intonation, a pitch, a timbre, a volume, a rhythm, and the like. Various parameters that are most preferred by the user may be determined based on a user preference analysis and a current mood status. For example, when the user is happy, a parameter of an acoustic model of the voice assistant may be set to 0.8 times a first speaking speed, 1.3 times a first intonation, 0.9 times a first rhythm, and 1.2 times a first female timbre. An acoustic model parameter preset in the vehicle may be set based on data provided by a vehicle manufacturer. For example, a voice assistant of a large vehicle such as an SUV has a relatively low speaking speed. A vehicle oriented to a female customer sets a lower first female timbre parameter.

The method in FIG. 5(a) to FIG. 5(e)-3 or FIG. 6 may be applied to adjust the acoustic parameter based on the emotion status of the user and/or the vehicle status.

S1004: Perform voice broadcast with reference to the first text information and the acoustic parameter.

Specifically, user interaction (user interaction, UI) may perform voice broadcast with reference to an adjusted acoustic parameter and the first text information.

In this embodiment of this application, the in-vehicle voice assistant may obtain the candidate text and the syntactic parameter of voice broadcast, and obtain, based on the candidate text and the syntactic parameter, the first text information of voice broadcast. In addition, the in-vehicle voice assistant adjusts the acoustic parameter based on the emotion status of the user and the vehicle driving parameter, and finally performs voice broadcast with reference to the adjusted acoustic parameter and the first text information, providing the user with personalized voice broadcast experience.

FIG. 11 is a flowchart of a real-time optimization policy of voice broadcast of a voice assistant according to an embodiment of this application. The voice broadcast optimization policy of the voice assistant in FIG. 11 may be applied to the voice broadcast policy 1000 of the voice assistant in FIG. 10.

The real-time optimization policy of voice broadcast is mainly applied to initial model training before a user uses voice broadcast, and adjustment of a voice broadcast process after the user uses voice broadcast. The adjustment after the user uses voice broadcast may include voice broadcast text adjustment, response policy adjustment, and UI interface adjustment. Specifically, adjustment may be actively selected by the user, and the user may control, by using a specific function button on a vehicle, whether to perform adjustment.

In this manner, when the user chooses not to enable an adjustment function, a model does not collect user data for model training, so that user privacy can be protected. In addition, when the user chooses to enable the adjustment function, voice broadcast can be optimized based on user feedback, improving human-computer interaction experience of the user.

(1) Initial model training before the user uses voice broadcast.

An initial voice broadcast model can be established and trained by using a neural network model. A used method may be performing training by inputting a training set, and it may be considered that training is successful when loss converges. During voice broadcast, the user inputs different speeches, and an element such as an entity, a relationship, and a status of the speech may be output by using the initial model.

Content of the training set of the initial model may be a combination of a text, speech, a user image, and a vehicle status. A training target is a user emotion and an acoustic parameter.

For example, the input content in the training set may be one or more of the following content:

```
<text:>: indicates a specific entity, for example, <entity: motor vehicle signal light>
<speech:>: a speech command
<vehicle speed:>: a specific driving speed
<battery level :>: a remaining battery level of a vehicle
<road surface:>: road surface flatness
<lane:>: a width of a lane on which a vehicle is driving
<driving safety:> whether a vehicle driving manner is safe, for example, whether a
vehicle is excessively close to a wall or a solid line
<alarm:>: whether an alert is present in a current vehicle
...
```

The acoustic parameters may include:

```
<text>, <pitch>, <timbre>, <intonation>, <rhythm>...
```

Voice assistant selection training

A voice assistant selection training method includes: inputting identity information of the user into a first model, to obtain a voice assistant that matches the identity information of the user. The first model is obtained based on a first training sample. The first training sample includes sample identity information of the user and voice assistant attribute sample information. The voice assistant attribute includes at least one of the following content: an interaction assistant appearance, interaction assistant audio, and an interaction style.

(2) Adjustment after the user uses voice broadcast

a. Response policy adjustment

Starting from a time point when the user uses voice broadcast, a real-time user training target changes to real-time user feedback. The model analyzes an emotional change trend of the user based on the user feedback in a multi-round dialog, and determines a corresponding optimization direction.

For example, when a positive emotion value of the user continuously decreases, a speaking speed becomes faster, and a sentence structure becomes shorter, the model analyzes that the user is not satisfied with a current answer of the voice assistant. In this case, a target emotion of a training task of the model is changed to a parameter corresponding to a positive emotion threshold, so that an optimization direction of a subsequent voice broadcast parameter is a positive emotion.

It should be understood that, training of the parameter corresponding to the positive emotion threshold may mean that when the voice assistant analyzes that the user is not satisfied with an answer, the voice assistant reduces the first threshold and uses an adversarial emotion response policy.

b. UI interface adjustment

When the user uses voice broadcast, a vehicle display can display image information. Adjustment may be optimizing a UI model of the image information based on the user feedback in the multi-round dialog, so that a UI interface displayed on the display meets a personalized requirement of the user.

For example, when the model finds through analysis that a user emotion value continuously decreases, the training task of the model changes into enriching an image of the UI interface. Specifically, an image on the display before training may be one expression or one picture, and the image on the display after training may be displayed as an animation model. For another example, the image on the display before training may be a static animation model, and the image on the display after training may be an animation model with a body movement.

c. Text generation adjustment

After the user uses voice broadcast, the in-vehicle voice assistant can perform text generation training, to optimize voice broadcast. A target of text training is always to be close to a candidate text. A training manner may be enabling first text information to be similar to an original candidate text by using the neural network model having a text sentence classification function. For example, training is performed by using a triplet loss neural network (neural network, NN) model, a convolutional neural network (convolutional neural network, CNN) model, or a recurrent neural network (Recurrent Neural Network, RNN) model.

As shown in FIG. 11, during NN model training, a user command may be divided into three dimensions: positive, anchor, and negative. Positive indicates that the user command has a positive emotion, anchor indicates that the user command does not have a positive emotion or has a negative emotion, and negative indicates that the user command has a negative emotion. For example, when the user command is how can I turn on an ambient light, an emotion status of the user is positive; when the user command is how to turn on an ambient light, the emotion status of the user is anchor; when the user command is how to turn off an ambient light, the emotion status of the user is negative.

During NN model training, positive, anchor, and negative features need to be separately extracted. An extracted positive feature may be denoted as u, an extracted anchor feature may be denoted as v, and an extracted negative feature may be denoted as t. Through training, a distance di between the feature v and the feature u may be as small as possible, a distance $d_2$ between the feature v and feature the t may be as large as possible, and a minimum spacing exists between di and $d_2$. Then, a value relationship between $d_1$-$d_2$+eps and 0 is compared, a maximum value of a comparison result is used as a loss of model training, and a similarity between the first text information and the original candidate text is ensured by reducing a loss in a training iteration process. eps is a constant, and may be set based on an actual application situation of the model.

In this embodiment of this application, the in-vehicle voice assistant may optimize voice broadcast in real time based on the user feedback in terms of initial model training, an emotion optimization direction, text generation training, and UI interface optimization. An optimized speech model may perform voice broadcast on the first text information based on the emotion status of the user, to provide the user with more user-friendly voice broadcast experience.

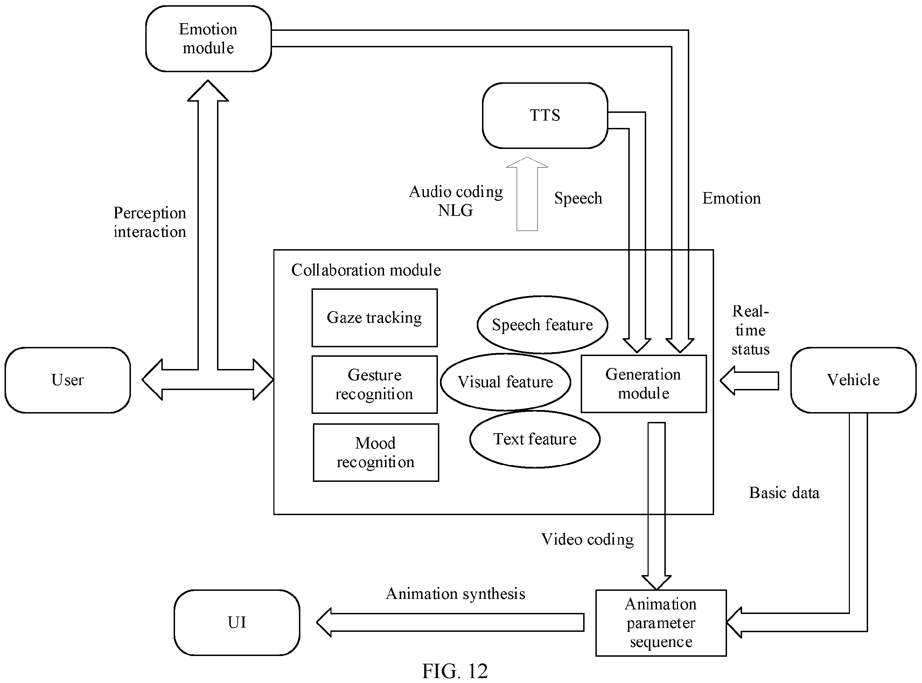

FIG. 12 is an architectural diagram of expression animation generation of a voice assistant according to an embodiment of this application. The architectural diagram of expression animation generation of the voice assistant in FIG. 12 may be applied to the vehicle 100 in FIG. 1, or may be applied to the architectural diagram of the voice assistant system in FIG. 6.

In this embodiment of this application, based on voice broadcast of a common voice assistant, voice assistant animation generation is added, so that the voice assistant has a character image and interacts with a user based on the character image.

As shown in FIG. 12, a collaboration module extracts a speech feature, a visual feature, and a text feature of the user by performing visual tracking, gesture recognition, and mood recognition on the user, and performs audio coding output by using an NLG, to perform voice broadcast. Therefore, speech is input to a generation module. Similarly, an emotion module performs perception interaction with the user, and inputs an obtained emotion to the generation module, and a vehicle inputs a real-time status in a driving process to the generation module. After obtaining speech of the user, the emotion of the user, and the real-time status of the vehicle, the generation module processes the obtained information, generates a video code, outputs an animation parameter sequence, and finally implements human-computer interaction with the user after animation synthesis is performed on the animation parameter sequence.

During human-computer interaction with the user by using an animation, a facial expression of the animation should be associated with text representation and emotion of a speaking character. Therefore, in this embodiment of this application, input of a facial expression generation module of the voice assistant mainly includes two parts: text feature representation and emotion feature representation. Before an input text (a text of voice broadcast) is input to the generation module, text preprocessing needs to be performed. A text preprocessing process may include an operation such as word segmentation, part-of-speech tagging, and pinyin conversion. After the input text is preprocessed, feature extraction and embedding (embedding) need to be performed on processed text data. An emotion feature may be obtained through emotion analysis, and embedding (embedding) is performed on an obtained emotion type, to convert the emotion type into a low-dimensional vector.

Emotion analysis may use one or more of multi-modal emotion detection analysis, text emotion detection analysis, and speech emotion detection analysis. Specifically, multi-modal emotion detection analysis mainly analyzes a facial expression of the user in a driving process, and performs emotion classification by using a video image emotion analysis method. Text emotion detection analysis is an emotion classification method based on an emotion word vector. A Sentence is input into a model in a form of a "word-word vector (embedding)" matrix for learning and classification. Speech emotion detection analysis is to classify emotions based on a timbre and a speaking speed of voice broadcast.

After text preprocessing and emotion analysis are performed, a text sequence and an emotion sequence that are aligned in a time sequence are input into the facial expression generation model. After processing the text sequence and the emotion sequence, the model outputs an animation sequence with duration of T frames (T is greater than 0). In this way, after animation synthesis is subsequently performed on the animation sequence, the voice assistant may have a character image, and interact with the user with the character image.

It should be understood that the text sequence and the emotion sequence that are aligned in a time sequence may mean that there is a correspondence between the text sequence and the emotion sequence at a same moment. After the text sequence and the emotion sequence are aligned in a time sequence, model processing can be facilitated, and it can also be ensured that a more accurate animation sequence is generated.

It should also be understood that embedding (embedding) is a manner of converting a discrete variable into a continuous vector for representation. In a neural network, embedding (embedding) can reduce a quantity of spatial dimensions of a discrete variable, and represent the variable meaningfully.

In this embodiment of this application, the text of voice broadcast and an emotion analysis result of the user are input into the facial expression generation model of the voice assistant, the facial expression generation model performs processing to generate an animation sequence, and animation synthesis is performed. In this way, the voice assistant may have a character image, and human-computer interaction experience of the user is improved.

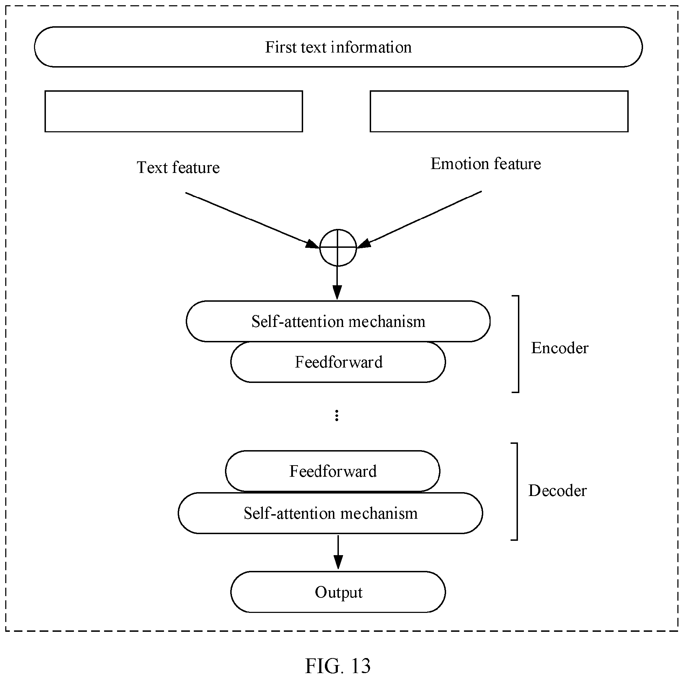

FIG. 13 is a network structure of a facial expression generation model of a voice assistant according to an embodiment of this application. The network structure of the facial expression generation model of the voice assistant in FIG. 13 may be applied to the architectural diagram of expression animation generation of the voice assistant in FIG. 12.

A neural network used in the facial expression generation model may be an encoding-decoding network structure, and may be specifically performed based on a BERT model, a Doc2Vec model, or an LSTM model. As shown in FIG. 13, for generating a text, text embedding and emotion embedding are first separately performed to extract a text feature and an emotion feature, and a signal is input to an encoder. The encoder extracts meaningful information from the input signal, and the information is represented by a hidden layer code. The decoder converts/decodes the hidden layer code into an animation parameter sequence to be output. The hidden layer code is a manner in which the encoder and the decoder transfer and process information.

In this embodiment of this application, a text and an emotion that are input into the facial expression generation model are converted, by using the encoding-decoding network structure through hidden-layer encoding, into the animation parameter sequence to be output, and then animation synthesis is performed. In this way, the voice assistant may have a character image, and human-computer interaction experience of the user is improved.

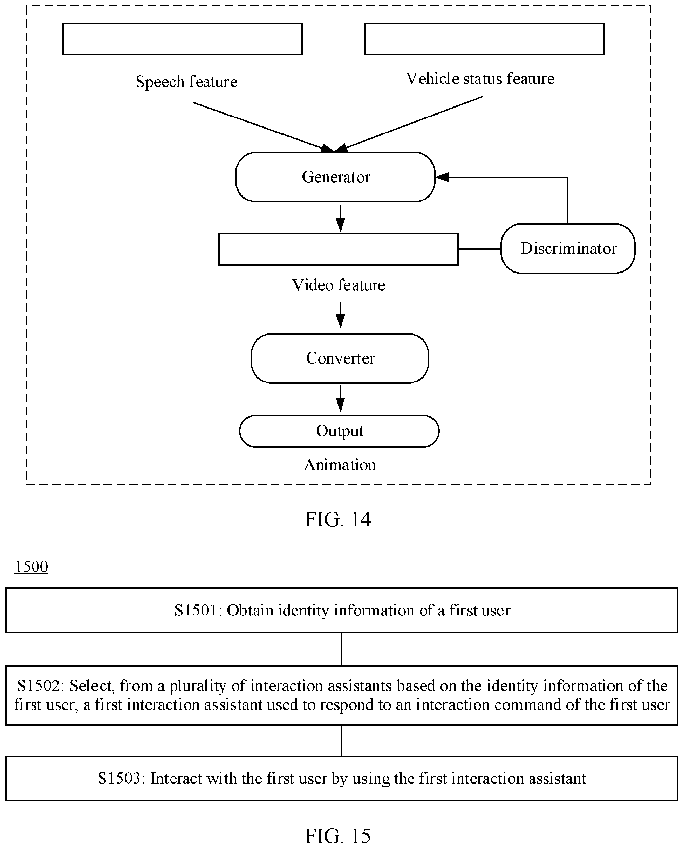

FIG. 14 is a network structure of a body animation generation model of a voice assistant according to an embodiment of this application. The network structure of the body animation generation model of the voice assistant in FIG. 14 may be applied to the vehicle 100 in FIG. 1, or may be applied to the architectural diagram of the in-vehicle voice assistant system in FIG. 6.

In this embodiment of this application, based on voice broadcast of a common voice assistant, voice assistant body animation generation is added, so that the voice assistant has a character image and interacts with a user based on the character image.

In a process of using the voice assistant, in addition to speaking, the user may also perform some actions such as shaking a head or swinging a hand. Therefore, in this embodiment of this application, a user action may be combined with a speaking habit. In different cases and different scenarios, a factor such as speech, a vehicle condition, and an environment are used as model input. A video image feature generated by model inference is compared with a habitual action of the user. A comparison angle may include a direction, an amplitude, and the like of the action. In addition, if a gender set by the voice assistant is the same as that of the user, a learning target may be set to a mirror mode; if genders are different, a learning target may be set to an adversarial mode. Finally, a body language of the voice assistant is synchronized with the speech, the vehicle condition, and the environment.

It should be understood that the mirror mode may mean that the image feature generated by the voice assistant through inference is positively correlated to a user habit, and the adversarial mode may mean that the image feature generated by the voice assistant through inference is negatively correlated to the user habit.

As shown in FIG. 14, before body animation generation of the voice assistant, speech embedding (embedding) and vehicle status embedding (embedding) need to be performed first to obtain a speech feature and a vehicle status feature. The speech may be decomposed into text information and acoustic information. The acoustic information includes a speaking speed, a timbre, and a rhythm. In this embodiment of this application, after embedding (embedding) processing is performed on the rhythm and the text information of the speech, a speech feature with information corresponding to a time sequence may be obtained. Vehicle status embedding (embedding) is to perform an embedding operation on a driving status factor of a vehicle and an environment status factor obtained from an outside of the vehicle, and to add the two factors to obtain feature representation of a total vehicle status factor.

After the speech feature and the vehicle status feature are obtained, the speech feature and the vehicle status feature are input into a generator. The generator may output an image of each frame of a video by using an image matting algorithm (the image matting algorithm may be implemented by using an NN model), and extract a character image part in the video, to form a new video sequence. In addition, the generator may extract a captured action from the video by using a physical simulation algorithm, and combine with subsequent image processing, so that a voice assistant image restores a real action in the video, and in a process of accumulating action data, the voice assistant implements a body action capability that is based on a command and corresponds to an objective environment change or external stimulation.

In this embodiment of this application, the user action may be combined with the speaking habit. In different cases and different scenarios, a factor such as the speech, the vehicle condition, and the environment is used as model input, to generate a body action animation that matches voice broadcast. Finally, a body language of the voice assistant is synchronized with the speech, the vehicle condition, and the environment.

FIG. 15 is a schematic flowchart of a human-computer interaction method according to an embodiment of this application. The method 1500 may be applied to the application scenarios in FIG. 2(a)-1 to FIG. 2(g)-2 to FIG. 5(a) to FIG. 5(e)-3, and the method 1500 may include the following steps.

S1501: Obtain identity information of a first user.

Specifically, the identity information of the first user may include account information of the first user and/or biometric feature parameter information of the first user. The biometric feature parameter information may include one or more of facial information, iris information, or voiceprint information of the first user.

The first user may be the male user 201a (which may also be referred to as a user A) in FIG. 2(a)-1 to FIG. 2(g)-2, or may be the female user 201b (which may also be referred to as a user B) in FIG. 2(a)-1 to FIG. 2(g)-2. The first interaction assistant may be the interaction assistant 232a in FIG. 2(a)-1 to FIG. 2(g)-2, or may be the interaction assistant 232b in FIG. 2(a)-1 to FIG. 2(g)-2.

S1502: Select, from a plurality of interaction assistants based on the identity information of the first user, a first interaction assistant used to respond to an interaction command of the first user.

The first interaction assistant used to respond to the interaction command of the first user may be selected from the plurality of interaction assistants in different manners.

In a possible implementation, the method may be applied to a vehicle. The vehicle may analyze an age, a gender, and a hobby of the first user based on the account information of the first user, and select, from the plurality of interaction assistants, an interaction assistant that matches the age, the gender, and the hobby of the first user to interact with the user.

In a possible implementation, the method may be applied to a vehicle. The vehicle may collect a speech command sent by the first user in a preset time period (for example, one month) or at a preset frequency (for example, 50 times), analyze an emotion status (for example, sad, happy, and normal) of the user based on the speech command of the first user, and select an interaction assistant that matches the emotion status of the first user to interact with the user.

In a possible implementation, the first interaction assistant may be an interaction assistant preset by the first user. The first user may select and set an image and an interaction style of the first interaction assistant based on a preference of the first user, and perform human-computer interaction by using the first interaction assistant.

S1503: Interact with the first user by using the first interaction assistant.

It should be understood that, the human-computer interaction method provided in this embodiment of this application may be applied to a terminal device such as a vehicle or a mobile phone.

In this embodiment of this application, the identity information of the user may be obtained in different manners, the interaction assistant used to respond to the interaction command of the user is selected from the plurality of interaction assistants based on the identity information of the user, and human-computer interaction is performed by using the interaction assistant. This can meet personalized requirements of different users for human-computer interaction in different scenarios, and improve human-computer interaction experience of the user.

For different application scenarios in FIG. 2(a)-1 to FIG. 2(g)-2 to FIG. 5(a) to FIG. 5(e)-3, the human-computer interaction method may further include other steps.

In a possible implementation, the human-computer interaction method further includes: obtaining identity information of a second user; switching, based on the identity information of the second user, the first interaction assistant to a second interaction assistant used to respond to an interaction command of the second user, where the plurality of interaction assistants include the second interaction assistant; and interacting with the second user by using the second interaction assistant. The first user is a user in a driving area in a cockpit of a transportation means, and the second user is a user in a non-driving area in the cockpit of the transportation means.

The identity information of the second user may include account information of the second user and/or biometric feature parameter information of the second user. The biometric feature parameter information may include one or more of facial information, iris information, or voiceprint information of the second user.

The obtaining identity information of a second user may be applicable to different application scenarios. For example, when the second user enters a vehicle, the vehicle may obtain facial information of the second user by using a camera in the vehicle, to complete switching to the second interaction assistant. For another example, when the vehicle detects that the second user sends speech information, the vehicle obtains the identity information of the second user through voiceprint information recognition, to complete switching to the second interaction assistant.

In this application scenario, the first user may be the female user 201b (which may also be referred to as the user B) in FIG. 2(a)-1 to FIG. 2(g)-2. The second user may be a male user 201a (or may be referred to as a user A) in FIG. 2(a)-1 to FIG. 2(g)-2, the first interaction assistant may be the interaction assistant 232b in FIG. 2(a)-1 to FIG. 2(g)-2, and the second interaction assistant may be the interaction assistant 232a in FIG. 2(a)-1 to FIG. 2(g)-2.

In this embodiment of this application, for different types of users in the transportation means, interaction may be performed by using interaction assistants with different interaction styles and interaction models, to provide more humanized interaction experience for different users in the transportation means.

In a possible implementation, the human-computer interaction method further includes: obtaining an interaction command sent by a third user; and interacting with the third user by using the first interaction assistant.

In this application scenario, the first user may be the female user 201b (which may also be referred to as the user B) in FIG. 2(a)-1 to FIG. 2(g)-2. The third user may be the male user 201a (or may be referred to as the user A) in FIG. 2(a)-1 to FIG. 2(g)-2, and the first interaction assistant may refer to the interaction assistant 232b in FIG. 2(a)-1 to FIG. 2(g)-2.

In this embodiment of this application, in a process in which the first interaction assistant is used for interaction, the interaction command sent by the third user is obtained, and the first interaction assistant may be used to interact with the third user. In this manner, no interaction assistant needs to be matched for the third user in advance, and a more flexible human-computer interaction mode can be provided.

In a possible implementation, an interaction attribute of the first interaction assistant is different from an interaction attribute of the second interaction assistant, and the interaction attribute includes at least one of the following content: an interaction assistant appearance, interaction assistant audio, and an interaction style.

The interaction assistant appearance may include, for example, a character image or an animation image. The interaction assistant audio may be an acoustic parameter of a voice assistant, including one or more of an interaction speaking speed, an intonation, a pitch, a timbre, a volume, and a rhythm. The interaction style may include, for example, sad, happy, and normal.

In this embodiment of this application, at least one interaction attribute of the first interaction assistant is set to be different from that of the second interaction assistant, so that a personalized interaction assistant is matched for the user, and the user can be provided with more humanized interaction experience.

In a possible implementation, the human-computer interaction method further includes: obtaining identity information of a second user; switching, based on the identity information of the second user, the first interaction assistant to a second interaction assistant used to respond to an interaction command of the second user, where the plurality of interaction assistants include the second interaction assistant; and interacting with the second user by using the second interaction assistant. The first user and the second user are users in a driving area in a cockpit of a transportation means.

In this application scenario, the first user may be the male user 201a (which may also be referred to as the user A) in FIG. 2(a)-1 to FIG. 2(g)-2, and the second user may be the female user 201b (which may also be referred to as the user B) in FIG. 2(a)-1 to FIG. 2(g)-2. The first interaction assistant may be the interaction assistant 232a in FIG. 2(a)-1 to FIG. 2(g)-2, and the second interaction assistant may be the interaction assistant 232b in FIG. 2(a)-1 to FIG. 2(g)-2.

In this embodiment of this application, both the first user and the second user may be the users in the driving area in the cockpit of the transportation means. In this case, after the driver of the vehicle is changed, the interaction assistant also performs corresponding switching, to provide different drivers with more user-friendly interaction experience.

In a possible implementation, the interacting with the first user by using the first interaction assistant includes: interacting with the first user by using a first interaction style of the first interaction assistant. The method further includes: obtaining an emotion status of the first user in preset duration or at a preset frequency; updating the first interaction style of the first interaction assistant to a second interaction style based on the emotion status of the first user; and interacting with the first user by using the second interaction style of the first interaction assistant.

The interaction style of the interaction assistant may include one or more of an acoustic parameter of the interaction assistant, text information of human-computer interaction displayed on a vehicle display, and an image parameter of the interaction assistant. The image parameter may be a character image parameter or an animation image parameter. The acoustic parameter may include one or more of a speaking speed, an intonation, a pitch, a timbre, a volume, and a rhythm. In addition, the acoustic parameter may further include a dialect parameter, for example, a Shanghai dialect and a Shaanxi dialect.

In this application scenario, the first interaction style may be any voice broadcast style option in FIG. 5(a) to FIG. 5(e)-3, and the second interaction style may be any voice broadcast style option different from the first interaction style in FIG. 5(a) to FIG. 5(e)-3.

In this embodiment of this application, the interaction style of the interaction assistant may be switched based on the emotion status of the user, and the interaction style that meets the emotion status of the user is used to interact with the user. In this manner, an emotional requirement of the user can be considered during human-computer interaction, and human-computer interaction experience of the user is improved.

In a possible implementation, before the updating the first interaction style of the first interaction assistant to a second interaction style based on the emotion status of the first user, the method further includes: obtaining a command for enabling an interaction style update function, where when the interaction style update function is enabled, the interaction style of the first interaction assistant can be updated based on the emotion status of the first user.

It should be understood that in this embodiment of this application, the interaction style update function may also be referred to as a real-time interaction assistant optimization function.

In this embodiment of this application, the user may choose, based on a preference of the user, whether to enable the interaction style update function. In this manner, when the user chooses not to enable the function, the vehicle does not collect and analyze interaction data between the user and the interaction assistant, so that user privacy can be protected. In addition, when the user chooses to enable the function, the interaction style of the interaction assistant can change based on the emotion status of the user, providing the user with personalized human-computer interaction experience.

An embodiment of this application further provides an apparatus configured to implement any one of the foregoing methods, for example, provides an apparatus including a unit (or a means) used to implement the steps performed by the mobile phone or the vehicle in any one of the foregoing methods.

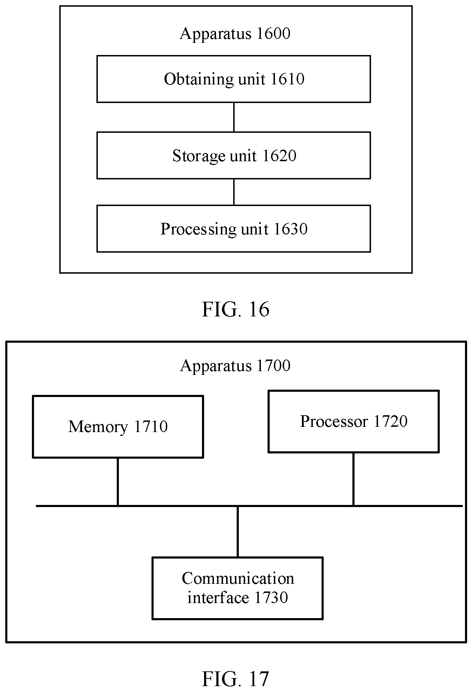

FIG. 16 is a schematic diagram of a human-computer interaction apparatus 1600 according to an embodiment of this application. The apparatus 1600 may be used in the vehicle 100 in FIG. 1.

The apparatus 1600 may include an obtaining unit 1610, a storage unit 1620, and a processing unit 1630. The obtaining unit 1610 may implement a corresponding communication function, and the obtaining unit 1610 may also be referred to as a communication interface or a communication unit, configured to obtain data. The storage unit 1620 is configured to store corresponding instructions and/or data. The processing unit 1630 is configured to perform data processing. The processing unit 1630 may read the instructions and/or data in the storage unit, so that the apparatus implements the foregoing method embodiments.

In a possible implementation, the apparatus includes the obtaining unit 1610 and the processing unit 1630. The obtaining unit 1610 is configured to obtain identity information of a first user. The processing unit 1630 is configured to select, from a plurality of interaction assistants based on the identity information of the first user, a first interaction assistant used to respond to an interaction command of the first user. The processing unit 1630 is further configured to interact with the first user by using the first interaction assistant.

In a possible implementation, the obtaining unit 1610 is further configured to obtain identity information of a second user. The processing unit 1630 is further configured to switch, based on the identity information of the second user, the first interaction assistant to a second interaction assistant used to respond to an interaction command of the second user, where the plurality of interaction assistants include the second interaction assistant. The processing unit 1630 is further configured to interact with the second user by using the second interaction assistant.

In a possible implementation, an interaction attribute of the first interaction assistant is different from an interaction attribute of the second interaction assistant, and the interaction attribute includes at least one of the following content: an interaction assistant appearance, interaction assistant audio, and an interaction style.

In a possible implementation, the apparatus is used in a transportation means, and the first user and the second user are users in a driving area in a cockpit of the transportation means.

In a possible implementation, the obtaining unit 1610 is further configured to obtain an interaction command sent by a third user. The processing unit 1630 is further configured to interact with the third user by using the first interaction assistant.

In a possible implementation, the processing unit 1630 is specifically configured to interact by using a first interaction style of the first interaction assistant. The obtaining unit 1610 is further configured to obtain an emotion status of the first user in preset duration or at a preset frequency. The processing unit 1630 is further configured to update the first interaction style of the first interaction assistant to a second interaction style based on the emotion status of the first user. The processing unit 1630 is further configured to interact by using the second interaction style of the first interaction assistant.

In a possible implementation, the obtaining unit 1610 is further configured to obtain a command for enabling an interaction style update function, where when the interaction style update function is enabled, the interaction style of the first interaction assistant can be updated based on the emotion status of the first user.

In a possible implementation, the identity information of the first user includes account information of the first user and/or biometric feature parameter information of the first user.

In a possible implementation, the first interaction assistant is a voice interaction assistant.

Optionally, if the apparatus 1600 is located in a vehicle, the processing unit 1630 may be the processor 131 shown in FIG. 1, and the storage unit 1620 may be the memory 132 shown in FIG. 1. The memory 132 may be a storage unit (for example, a register or a cache) in a chip, or may be a storage unit (for example, a read-only memory or a random access memory) outside the chip in the vehicle.

Optionally, the processing unit 1630 may be the processor 1720 in FIG. 17, the storage unit 1620 may be the memory 1710 in FIG. 17, and the obtaining unit 1610 may be the communication interface 1730 in FIG. 17.

FIG. 17 is a schematic diagram of a human-computer interaction apparatus 1700 according to an embodiment of this application. The apparatus 1700 may be used in the vehicle 100 in FIG. 1.

The human-computer interaction apparatus 1700 includes: a memory 1710, a processor 1720, and a communication interface 1730. The memory 1710, the processor 1720, and the communication interface 1730 are connected by using an internal connection path. The memory 1710 is configured to store instructions. The processor 1720 is configured to execute the instructions stored in the memory 1720, to control the communication interface 1730 to receive/send at least some parameters of a model. Optionally, the memory 1710 may be coupled to the processor 1720 by using an interface, or integrated with the processor 1720.

It should be noted that the communication interface 1730 uses a transceiver apparatus, for example, but not limited to, a transceiver, to implement communication between the human-computer interaction apparatus 1700 and another device or a communication network. The communication interface 1730 may further include an input/output interface (input/output interface).

The processor 1720 may be configured to store one or more computer programs, and the one or more computer programs include instructions. When the instructions are run by the processor 1720, the human-computer interaction apparatus 1700 is enabled to execute the technical solution of human-computer interaction in the foregoing embodiments.

Optionally, the apparatus 1700 may be located in the vehicle 100 in FIG. 1.

Optionally, the apparatus 1700 may be the computing platform 130 in the vehicle in FIG. 1.

An embodiment of this application further provides a computer readable medium. The computer-readable medium stores program code, and when the computer program code is run on a computer, the computer is enabled to perform any method in FIG. 2(a)-1 to FIG. 2(g)-2 to FIG. 15.

An embodiment of this application further provides a chip, including at least one processor and a memory. The at least one processor is coupled to the memory, and is configured to read and execute instructions in the memory, to perform any method in FIG. 2(a)-1 to FIG. 2(g)-2 to FIG. 15.

A computer program product is provided. The computer product includes a computer program, and when the computer program is executed, a computer is enabled to perform any method in FIG. 2(a)-1 to FIG. 2(g)-2 to FIG. 15.

An embodiment of this application further provides a terminal device. The terminal device may be a vehicle, or may be a mobile phone. When the terminal device is a vehicle, the terminal device may include an in-vehicle infotainment system and a microphone.

It should be understood that, the processor in embodiments of this application may be a central control unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or any conventional processor.

It should be further understood that, in this embodiment of this application, the memory may include a read-only memory and a random access memory and provide instructions and data for the processor. Apart of the processor may further include a non-volatile random access memory. For example, the processor may further store information about a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

Terminologies such as "component", and "module" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method can be performed in other manners. For example, the described apparatus embodiments are only examples. For example, the division of units is only logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A human-computer interaction method, wherein the method comprises:

   obtaining identity information of a first user;
   selecting, from a plurality of interaction assistants based on the identity information of the first user, a first interaction assistant used to respond to an interaction command of the first user; and
   interacting with the first user by using the first interaction assistant.

2. The method according to claim 1, wherein the method further comprises:

   obtaining identity information of a second user;
   switching, based on the identity information of the second user, the first interaction assistant to a second interaction assistant used to respond to an interaction command of the second user, wherein the plurality of interaction assistants comprise the second interaction assistant; and
   interacting with the second user by using the second interaction assistant.

3. The method according to claim 2, wherein the method is applied to a transportation means, and the first user and the second user are users in a driving area in a cockpit of the transportation means.

4. The method according to claim 2 or 3, wherein an interaction attribute of the first interaction assistant is different from an interaction attribute of the second interaction assistant, and the interaction attribute comprises at least one of the following content: an interaction assistant appearance, interaction assistant audio, and an interaction style.

5. The method according to claim 1, wherein the method further comprises:

   obtaining an interaction command sent by a third user; and
   interacting with the third user by using the first interaction assistant.

6. The method according to claims 1 to 5, wherein the interacting with the first user by using the first interaction assistant comprises:

interacting with the first user by using a first interaction style of the first interaction assistant; and the method further comprises:

obtaining an emotion status of the first user in preset duration or at a preset frequency;
updating the first interaction style of the first interaction assistant to a second interaction style based on the emotion status of the first user; and
interacting with the first user by using the second interaction style of the first interaction assistant.

7.  The method according to claim 6, wherein before the updating the first interaction style of the first interaction assistant to a second interaction style based on the emotion status of the first user, the method further comprises:
obtaining a command for enabling an interaction style update function, wherein when the interaction style update function is enabled, the interaction style of the first interaction assistant can be updated based on the emotion status of the first user.

8.  The method according to any one of claims 1 to 7, wherein the identity information of the first user comprises account information of the first user and/or biometric feature parameter information of the first user.

9.  The method according to any one of claims 1 to 8, wherein the first interaction assistant is a voice interaction assistant.

10. A human-computer interaction apparatus, wherein the apparatus comprises an obtaining unit and a processing unit, wherein

the obtaining unit is configured to obtain identity information of a first user;
the processing unit is configured to select, from a plurality of interaction assistants based on the identity information of the first user, a first interaction assistant used to respond to an interaction command of the first user; and
the processing unit is further configured to interact with the first user by using the first interaction assistant.

11. The apparatus according to claim 10, wherein

the obtaining unit is configured to obtain identity information of a second user;
the processing unit is further configured to switch, based on the identity information of the second user, the first interaction assistant to a second interaction assistant used to respond to an interaction command of the second user, wherein the plurality of interaction assistants comprise the second interaction assistant; and
the processing unit is further configured to interact with the second user by using the second interaction assistant.

12. The apparatus according to claim 11, wherein the apparatus is used in a transportation means, and the first user and the second user are users in a driving area in a cockpit of the transportation means.

13. The apparatus according to claim 11 or 12, wherein an interaction attribute of the first interaction assistant is different from an interaction attribute of the second interaction assistant, and the interaction attribute comprises at least one of the following content: an interaction assistant appearance, interaction assistant audio, and an interaction style.

14. The apparatus according to claim 10, wherein

the obtaining unit is further configured to obtain an interaction command sent by a third user; and
the processing unit is further configured to interact with the third user by using the first interaction assistant.

15. The apparatus according to any one of claims 10 to 14, wherein

the processing unit is specifically configured to interact by using a first interaction style of the first interaction assistant;
the obtaining unit is further configured to obtain an emotion status of the first user in preset duration or at a preset frequency;
the processing unit is further configured to update the first interaction style of the first interaction assistant to a second interaction style based on the emotion status of the first user; and
the processing unit is further configured to interact by using the second interaction style of the first interaction assistant.

**16.** The apparatus according to claim 15, wherein
the obtaining unit is further configured to obtain a command for enabling an interaction style update function, wherein when the interaction style update function is enabled, the interaction style of the first interaction assistant can be updated based on the emotion status of the first user.

**17.** The apparatus according to any one of claims 10 to 16, wherein the identity information of the first user comprises account information of the first user and/or biometric feature parameter information of the first user.

**18.** The apparatus according to any one of claims 10 to 17, wherein the first interaction assistant is a voice interaction assistant.

**19.** A human-computer interaction apparatus, comprising at least one processor and a memory, wherein the at least one processor is coupled to the memory, and is configured to: read and execute instructions in the memory, to perform the method according to any one of claims 1 to 9.

**20.** A computer-readable medium, wherein the computer-readable medium stores program code, and when the computer program code is run on a computer, the computer is enabled to perform the method according to any one of claims 1 to 9.

**21.** A chip, comprising at least one processor and a memory, wherein the at least one processor is coupled to the memory, and is configured to: read and execute instructions in the memory, to perform the method according to any one of claims 1 to 9.

**22.** A computer program product, wherein the computer program product comprises a computer program, and when the computer program is executed, a computer is enabled to perform the method according to any one of claims 1 to 9.

**23.** A terminal device, comprising the apparatus according to any one of claims 10 to 19.

FIG. 1

TO
FIG. 2(a)-2

FIG. 2(a)-1

EP 4 468 115 A1

FIG. 2(a)-2

Interaction assistant, what's the weather like today?

TO
FIG. 2(b)-2

FIG. 2(b)-1

201a

09:00    5G

Search for
nearby places

🏠 Home

Company

It's sunny all day today.
The sunshine is so bright!

231a

232a

Application

Singer: xxx

A x x x x x x x B

♥   ⏮   ⏸   ⏭

80%    260 km

360° surround view

25°C    24.5°C

FIG. 2(b)-2

EP 4 468 115 A1

TO
FIG. 2(c)-2

FIG. 2(c)-1

FIG. 2(c)-2

EP 4 468 115 A1

FIG. 2(d)

FIG. 2(e)-1

TO
FIG. 2(e)-2

Interaction assistant, what's the weather like today?

201

Log in

09:00

5G

Search for nearby places

Home

Company

It's sunny all day today.
The sunshine is so bright!

231a

232a

Application

Singer: xxx

A x x x x x x x B

80%    260 km

360° surround view

25°C    24.5°C

FIG. 2(e)-2

EP 4 468 115 A1

FIG. 2(f)

Interaction assistant, what's the weather like today?

TO
FIG. 2(g)-2

FIG. 2(g)-1

201

Log in

09:00

5G

Search for nearby places

Home

Company

It's sunny all day today.
Pay attention to sun protection!

232b

231b

Application

Singer: xxx

**A x x x x x x x B**

80%    260 km

360° surround view

25°C    24.5°C

FIG. 2(g)-2

EP 4 468 115 A1

User B

User A

TO
FIG. 3(a)-2

FIG. 3(a)-1

CONT. FROM
FIG. 3(a)-1

201b

09:00

Search for nearby places

Home

Company

Application

Singer: xxx

**A x x x x x x x B**

80%  260 km

360° surround view

25°C    24.5°C

FIG. 3(a)-2

Interaction assistant, what's the weather like today?

TO
FIG. 3(b)-2

FIG. 3(b)-1

CONT. FROM
FIG. 3(b)-1
~

201b

09:00

Search for
nearby places

Home

Company

It's sunny all day today.
The sunshine is so bright!

231a

232a

Application

Singer: xxx
A x x x x x x x B

80%   260 km

360° surround view

25°C        24.5°C

FIG. 3(b)-2

Interaction assistant, what's the weather like today?

TO
FIG. 3(c)-2

FIG. 3(c)-1

CONT. FROM
FIG. 3(c)-1

201b

09:00

It's sunny all day today.
Pay attention to sun protection!

232b

231b

Search for
nearby places

Home

Company

Application

Singer: xxx

A x x x x x x x B

80%  260 km

360° surround view

25°C     24.5°C

FIG. 3(c)-2

User A

User B

Interaction assistant, how long will it take to arrive at a destination?

TO FIG. 4(a)-2

FIG. 4(a)-1

CONT. FROM
FIG. 4(a)-1

201

Log in

09:00

5G

Search for
nearby places

🏠 Home

🏢 Company

**Estimated time of arrival of
the destination is 5 minutes.**

232a

231a

Singer: xxx
**A x x x x x x x B**

❤ ◁ ⓘⓘ ▷

Application

80%  260 km

360° surround view

25°C      24.5°C

FIG. 4(a)-2

48

User B

User A

Interaction assistant, play a piece of music

TO
FIG. 4(b)-2

FIG. 4(b)-1

CONT. FROM
FIG. 4(a)-2
~

201

Log in

09:00

Search for nearby places

Home

Company

OK, now playing "Song A" for you

232b

231b

Application

Singer: xxx

A x x x x x x x B

80%  260 km

360° surround view

25°C     24.5°C

CONT. FROM
FIG. 4(b)-1
~

FIG. 4(b)-2

Setting

Date and time

Security

Language and input

Add account

Interaction assistant — 502

FIG. 5(b)

500

501

App 1  App 2  App 3

App 4  App 5  Setting

FIG. 5(a)

FIG. 5(c)

Interaction assistant

Interaction assistant model ⟍ 503

√

☐

Voice broadcast style ⟍ 504

Happy ☐          Normal ☐          Sad √

Real-time interaction assistant optimization                              506

When a real-time optimization function is enabled, a          505
vehicle may collect and analyze user data in real time, and
update and optimize the interaction assistant model and the
voice broadcast style based on a data analysis result

507

Cancel          Save

EP 4 468 115 A1

Interaction assistant, play a piece of music

TO
FIG. 5(d)-2

FIG. 5(d)-1

~
TO
FIG. 5(d)-3
FIG. 5(d)-2

Singer X

"Song A"

**G x x x x x x x H**

02:15                                               03:20

FIG. 5(d)-3

EP 4 468 115 A1

201

Log in

7.10.2021    09:00

Search for
nearby places

Home

Company

OK, now playing "Song B" for you

231a

232a

Singer: Y

B x x x x x x x L

Application

80%    260 km

360° surround view

25°C    24.5°C

EP 4 468 115 A1

CONT. FROM
FIG. 5(e)-2

Singer Y

"Song B"

**B x x x x x x x L**

02:15                                        03:20

FIG. 5(e)-3

EP 4 468 115 A1

FIG. 6

FIG. 7

800

| S801: Obtain an emotion status parameter of a user |
|---|

| S802: Perform analysis and calculation on the emotion status parameter of the user |
|---|

| S803: Determine a voice broadcast mode based on a final emotion status parameter of the user |
|---|

FIG. 8

FIG. 9

1000

| S1001: Obtain a candidate text |
|---|

| S1002: Generate a natural language |
|---|

| S1003: Adjust an acoustic parameter based on an emotion status of a user and/or a vehicle status |
|---|

| S1004: Perform voice broadcast with reference to the acoustic parameter and first text information |
|---|

FIG. 10

TripleLoss:  $\text{Max}(d_1-d_2+\text{eps},0)$

$d_1$                    $d_2$

u              v              t

pooling        pooling        pooling

NN             NN             NN

positive        anchor        negative

How to turn on an ambient light    How to turn on an ambient light    How to turn off an ambient light

FIG. 11

FIG. 12

First text information

Text feature

Emotion feature

Self-attention mechanism

Feedforward

Encoder

⋮

Feedforward

Self-attention mechanism

Decoder

Output

FIG. 13

Speech feature

Vehicle status feature

Generator

Discriminator

Video feature

Converter

Output

Animation

FIG. 14

1500

S1501: Obtain identity information of a first user

S1502: Select, from a plurality of interaction assistants based on the identity information of the first user, a first interaction assistant used to respond to an interaction command of the first user

S1503: Interact with the first user by using the first interaction assistant

FIG. 15

Apparatus 1600

Obtaining unit 1610

Storage unit 1620

Processing unit 1630

FIG. 16

Apparatus 1700

Memory 1710

Processor 1720

Communication interface 1730

FIG. 17

## INTERNATIONAL SEARCH REPORT

| International application No. |
|---|
| **PCT/CN2022/078156** |

**A. CLASSIFICATION OF SUBJECT MATTER**

G06F 3/00(2006.01)i; G06F 3/16(2006.01)i; G06F 16/90(2019.01)i

According to International Patent Classification (IPC) or to both national classification and IPC

**B. FIELDS SEARCHED**

Minimum documentation searched (classification system followed by classification symbols)

G06F, G10L; CPC: G06F9/453, G06F3, G06F16

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 交互, 助手, 助理, 身份, 账号, ID, 生物, 指纹, 脸, 语音, interact, assistant, identity, account, biologic, fingerprint, face, voice, speech

**C. DOCUMENTS CONSIDERED TO BE RELEVANT**

| Category* | Citation of document, with indication, where appropriate, of the relevant passages | Relevant to claim No. |
|---|---|---|
| Y | CN 113656125 A (APOLLO INTELLIGENT CONNECTIVITY (BEIJING) TECHNOLOGY CO., LTD.) 16 November 2021 (2021-11-16) description, paragraphs 59-144 | 1-23 |
| Y | CN 112836098 A (SAMSUNG ELECTRONICS (CHINA) R&D CENTER; SAMSUNG ELECTRONICS CO., LTD.) 25 May 2021 (2021-05-25) description, paragraphs 50-117 | 1-23 |
| Y | CN 113050805 A (BEIJING SOGOU TECHNOLOGY DEVELOPMENT CO., LTD.) 29 June 2021 (2021-06-29) description, paragraphs 81-89 | 1-23 |
| A | WO 2021063343 A1 (HUAWEI TECHNOLOGIES CO., LTD.) 08 April 2021 (2021-04-08) entire document | 1-23 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 June 2022** | **06 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/078156**

| Patent document cited in search report | | | Publication date (day/month/year) | Patent family member(s) | | | Publication date (day/month/year) |
|---|---|---|---|---|---|---|---|
| CN | 113656125 | A | 16 November 2021 | None | | | |
| CN | 112836098 | A | 25 May 2021 | None | | | |
| CN | 113050805 | A | 29 June 2021 | None | | | |
| WO | 2021063343 | A1 | 08 April 2021 | CN | 110910872 | A | 24 March 2020 |

Form PCT/ISA/210 (patent family annex) (January 2015)